# EUROPÄISCHE PATENTSCHRIFT

(11) **EP 3 479 129 B1**
(45) Veröffentlichungstag und Bekanntmachung des Hinweises auf die Patenterteilung: **15.07.2020**
(21) Anmeldenummer: 17725593.2
(22) Anmeldetag: 24.05.2017
(51) Int. Cl.: G01N 35/10

(54) **DOSIERKOPF, DOSIERVORRICHTUNG UMFASSEND EINEN DOSIERKOPF UND VERFAHREN ZUM DOSIEREN MITTELS EINES DOSIERKOPFES**
METERING HEAD, METERING DEVICE COMPRISING A METERING HEAD, AND METHOD FOR METERING BY MEANS OF A METERING HEAD
TÊTE DE DOSAGE, DISPOSITIF DE DOSAGE COMPRENANT UNE TÊTE DE DOSAGE ET PROCÉDÉ DE DOSAGE AU MOYEN D'UNE TÊTE DE DOSAGE

(30) Priorität: 29.06.2016 DE 102016111912
(43) Veröffentlichungstag der Anmeldung: 08.05.2019
(73) Patentinhaber: Eppendorf AG, 22339 Hamburg (DE)
(72) Erfinder: WILMER, Jens, 22926 Ahrensburg (DE)
(74) Vertreter: Hauck Patentanwaltspartnerschaft mbB
(86) Internationale Anmeldenummer: PCT/EP2017/062568
(87) Internationale Veröffentlichungsnummer: WO 2018/001645

(56) Entgegenhaltungen:
- WO-A1-01/56695
- WO-A1-2005/113149
- WO-A1-2007/022667
- DE-A1- 19 917 375
- DE-C1- 10 022 693
- US-A1- 2012 258 026

## Beschreibung

Die Erfindung bezieht sich auf einen Dosierkopf zum gleichzeitigen Aufnehmen einer Vielzahl Pipettenspitzen, auf eine Dosiervorrichtung umfassend einen Dosierkopf zum gleichzeitigen Aufnehmen einer Vielzahl Pipettenspitzen und auf ein Verfahren zum Dosieren von Flüssigkeiten mittels eines Dosierkopfes zum gleichzeitigen Aufnehmen einer Vielzahl Pipettenspitzen.

Dosiervorrichtungen ("Pipettiervorrichtungen") mit einem Dosierkopf ("Pipettierkopf") zum gleichzeitigen Aufnehmen einer Vielzahl Pipettenspitzen werden insbesondere in medizinischen, biologischen, biochemischen und chemischen Laboratorien zur Dosierung von Flüssigkeiten verwendet.

Dosierköpfe zum gleichzeitigen Aufnehmen einer Vielzahl Pipettenspitzen haben eine Vielzahl nebeneinander angeordneter, paralleler Ansätze, die in Aufstecköffnungen am oberen Ende der Pipettenspitzen eingesetzt werden. Durch eine Spitzenöffnung am unteren Ende der Pipettenspitzen hindurch wird Flüssigkeit in die Pipettenspitzen aufgenommen und aus diesen ausgegeben.

Nach Gebrauch können die Pipettenspitzen von den Ansätzen gelöst und gegen frische Pipettenspitzen ausgetauscht werden. Hierdurch werden bei nachfolgenden Dosierungen Kontaminationen vermieden. Pipettenspitzen aus Kunststoff für den einmaligen Gebrauch sind kostengünstig verfügbar.

Bei der Ausführung als Luftpolsterpipettiervorrichtung ist mindestens eine Verdrängungseinrichtung für Luft in die Pipettiervorrichtung integriert und über Verbindungslöcher der Ansätze kommunizierend mit den Pipettenspitzen verbunden. Mittels der Verdrängungseinrichtung ist ein Luftpolster verlagerbar, sodass Flüssigkeit in die Pipettenspitzen eingesogen und daraus ausgestoßen wird. Die Verdrängungseinrichtungen sind meistens Zylinder mit darin verschieblichen Kolben. Bekannt sind aber auch Verdrängungseinrichtungen mit einer Verdrängungskammer und mindestens einer verformbaren Wand, wobei eine Verformung der Wand die Verdrängung des Luftpolsters bewirkt.

Bei der Ausführung als Direktverdrängerpipettiervorrichtung ist in der Pipettenspitze ein kleiner Kolben angeordnet, der beim Aufstecken der Pipettenspitze auf den Ansatz mit einem Kolbenantrieb der Pipettiervorrichtung gekoppelt wird.

Die Aufnahme der Flüssigkeit erfolgt bevorzugt in einem einzigen Schritt oder in mehreren kleinen Schritten. Die Abgabe der Flüssigkeit erfolgt beim Pipettieren in einem einzigen Schritt und beim Dispensieren in mehreren kleinen Schritten.

Die Dosiervorrichtungen können als manuell oder elektromotorisch angetriebene, handhabbare Mehrkanalpipetten ausgebildet sein, die vom Anwender beim Dosieren in der Hand gehalten werden.

Bei Dosierstationen ("Pipettierstationen") oder Dosierautomaten ("Pipettierautomaten") ist der Dosierkopf an einem Roboterarm oder einem anderen Übertragungssystem zum Verlagern des Dosierkopfes oberhalb einer Arbeitsfläche verlagerbar. Dosierstationen oder Dosierautomaten können mit dem Dosierkopf frische Pipettenspitzen aus einem Halter aufnehmen, mit den Pipettenspitzen Flüssigkeiten aus Gefäßen aufnehmen und in Gefäße abgeben und gebrauchte Pipettenspitzen in einen Abfallbehälter abwerfen. Dosierstationen oder Dosierautomaten können Bestandteil von Laborautomaten ("Workstations") sein, die außer dem Dosieren von Flüssigkeiten weitere Behandlungen von Flüssigkeiten durchführen können. Hierzu gehören insbesondere das Mischen, Temperieren und andere physikalische Behandlungen, die chemische oder biochemische Umsetzung und die Analyse von Proben.

Die Ansätze zum Halten von Pipettenspitzen sind vielfach als konischer, zylindrischer oder teils konischer und teils zylindrischer Vorsprung bezüglich eines Gehäuses oder eines anderen Trägers der Dosiervorrichtung ausgebildet. Die Pipettenspitzen sind mit einem Dichtsitz neben einer Aufstecköffnung an ihrem oberen Ende auf die Ansätze aufklemmbar. Hierfür werden die Ansätze in die Aufstecköffnungen der in einem Halter bereitstehenden Pipettenspitzen eingedrückt, sodass sich die Pipettenspitzen etwas aufweiten und unter Vorspannung auf den Ansätzen festsitzen. Die für das Aufklemmen aufzubringende Kraft steigt mit der Anzahl der Pipettenspitzen an.

Zum Lösen der aufgeklemmten Pipettenspitzen von den Ansätzen weisen die Pipettiervorrichtungen eine Abwurfeinrichtung mit einer Antriebseinrichtung und einem Abwerfer auf. Durch Betätigen der Antriebseinrichtung wird der Abwerfer so verlagert, dass er die Pipettenspitzen von den Ansätzen löst. Die Antriebseinrichtung wird entweder manuell oder von einem Elektromotor angetrieben. Die Abwurfkraft für das Lösen aufgeklemmter Pipettenspitzen von den Ansätzen steigt mit der Anzahl der Pipettenspitzen an.

Für das Aufklemmen von Pipettenspitzen auf 96 oder 384 Ansätze und Abwerfen der Pipettenspitzen von den Ansätzen sind hohe Kräfte aufzubringen.

Die DE 10 2004 003 433 B4 beschreibt eine Mehrkanalpipette, bei der der Kraftaufwand für das Aufklemmen der Pipettenspitzen auf den Ansätzen und das Lösen der Pipettenspitzen von den Ansätzen dadurch vermindert wird, dass die Ansätze verfedert sind und in axialer Richtung über einen durch den Abwerfer gebildeten Anschlag hinausstehen. Übersteigt beim Aufklemmen von Pipettenspitzen die Aufklemmkraft einen bestimmten Wert, so federn die Ansätze ein, bis die Pipettenspitzen am Abwerfer anliegen. Hierdurch wird die Aufklemmkraft auf einen Wert begrenzt, bei dem die Pipettenspitzen abdichtend auf den Ansätzen gehalten sind. Dementsprechend ist auch die Abwurfkraft begrenzt.

Die EP 2 735 369 A1 beschreibt eine Mehrkanalpipette, bei der die Abwurfkräfte weiter dadurch reduziert werden, dass der Abwerfer mehrere Kontaktelemente aufweist, die nacheinander auf die Pipettenspitzen treffen, um diese von den Ansätzen abzudrücken.

Die WO 01/56695 A1 beschreibt einen Pipettierkopf mit 96 Kanälen, wobei die Ansätze am unteren Ende einen größeren Konuswinkel als darüber aufweisen, um die Kraft zum Aufstecken von Pipettenspitzen mit einem Kragen größerer Wandstärke am oberen Ende und einer geringeren Wandstärke unterhalb des Kragens zu verringern. Der Pipettierkopf umfasst eine Anschlagplatte zum Abwerfen der Pipettenspitzen von den Ansätzen. Die Anschlagplatte ist abgestuft, um die Pipettenspitzen nacheinander von den Ansätzen abzudrücken und die Abwurfkraft zu reduzieren. Von der Anschlagplatte stehen Pfosten mit Vorspanneinrichtungen vor. Eine Kolbenplatte, die Kolben in Zylindern verlagert, die mit den Ansätzen verbunden sind, trifft beim Zurückziehen auf die Vorspanneinrichtungen, um das Abwerfen der Pipettenspitzen von den Ansätzen durch die Anschlagplatte auszulösen. Die Konstruktion mit Vorspanneinrichtungen zum Abwerfen von Pipettenspitzen ist aufwendig.

Die WO 2005/113149 A1 beschreibt eine Vorrichtung zur Aufnahme und Abgabe von Flüssigkeiten mit einem Pipettierkopf, der 96 Ansätze für Pipettenspitzen aufweist. 96 Kolben-Zylinder-Einheiten sind mit den Ansätzen verbunden und mittels einer Antriebsmechanik von Hand betätigbar. Der Pipettierkopf ist entlang einer Vertikalführung verschiebbar, um Pipettenspitzen von einem Pipettenspitzenträger aufzunehmen und Flüssigkeit einzusaugen und abzugeben. Der Pipettierkopf ist mittels eines Übersetzungshebels mit verstärkter Kraft nach unten drückbar, um den erforderlichen Kraftaufwand für das Aufnehmen von 96 Pipettenspitzen aufzubringen. Die Ansätze sind durch Löcher einer Lochplatte hindurchgeführt, die vertikal verlagerbar ist, um die Pipettenspitzen von den Ansätzen abzustreifen.

Die DE 20 2008 013 533 U1 beschreibt eine Pipettiervorrichtung mit einer Basisplatte und einer diese außen seitlich abdeckenden, elastischen Dichtplatte, wobei durch die Basisplatte und die Dichtplatte eine Vielzahl von in einem vorgegebenen Raster angeordneten Pipettierkanälen hindurchgeführt sind. Ein im gleichen Raster mit Pipettenspitzen, die jeweils einen Bund aufweisen, bestücktes Magazin steht in einer Magazinaufnahme liegend mittelbar über die Bünde und die Dichtplatte mit der Basisplatte kraftschlüssig in Verbindung. Die Magazinaufnahme ist von einem Magazinrahmen gebildet, der über ein Exzentergetriebe von einem Antriebsmotor angehoben und abgesenkt werden kann, um die Pipettenspitzen in abdichtende Anlage an der Dichtplatte zu bringen oder von der Dichtplatte zu lösen.

Pipettierautomaten, bei denen Pipettenspitzen in einem Magazin in einer Magazinaufnahme aufgenommen und an eine Dichtplatte angepresst werden, werden von der Firma Apricot Designs, Inc, Covina, CA, USA, unter den Produktbezeichnungen "i-Pipette" und "i-Pipette Pro" vermarktet.

Nachteilig ist, dass diese Pipettierautomaten nur mit speziellen Pipettenspitzen in einem speziellen Magazin zusammenarbeiten können. Ferner ist nachteilig, dass die Bestückung der Magazinaufnahme von Hand erfolgt.

Die EP 0 337 726 A2 beschreibt eine Vorrichtung zum gleichzeitigen Aufnehmen mehrerer Pipettenspitzen mittels paralleler Ansätze in einer gerade Reihe, die jeweils in einer Ringnut mit einer einstellbaren Nutenbreite einen elastomeren O-Ring aufweisen. Die Ausdehnung der O-Ringe in Umfangsrichtung ist durch Verstellen der Nutenbreiten veränderbar, um die Pipettenspitzen abdichtend auf den Ansätzen festzuklemmen und die Pipettenspitzen von den Ansätzen zu lösen. Zum Einstellen der Nutenbreiten sind die Nuten jeweils durch eine auf den Ansatz geschraubte Gewindehülse begrenzt, die mittels eines angekoppelten Getriebemechanismus auf dem Ansatz drehbar ist. Jede Gewindehülse ist fest mit einem Zahnrad verbunden. Die Zahnräder kämmen mit einer einzigen Zahnstange, die von einem drehbaren Handgriff angetrieben ist. Bei einer alternativen Ausführungsart ist jede einzelne Gewindehülse individuell von einem Elektromotor angetrieben und sind die Elektromotoren für einen gleichlaufenden Betrieb mit einer gemeinsamen Spannungsversorgung verbunden. Unterhalb der Ansätze ist eine Führungsplatte mit einer Reihe von Einkerbungen vorhanden, um beim Absenken der Vorrichtung die Pipettenspitzen auf die Ansätze auszurichten. Der Antrieb zum Festklemmen der Pipettenspitzen auf den Ansätzen ist konstruktiv aufwendig. Die Einkerbungen hindern die Pipettenspitzen nicht an einem Kippen auf den Ansätzen. Somit ist die Vorrichtung nur zum gleichzeitigen Aufnehmen einer geringen Anzahl nicht allzu eng nebeneinander angeordneter Pipettenspitzen geeignet. Das Ausführungsbeispiel hat vier Ansätze zum gleichzeitigen Aufnehmen von vier Pipettenspitzen.

Die DE 199 17 375 C2 beschreibt eine Pipettiereinheit mit einer Pipettenspitze und einem Ansatz, der ein Pipettierrohr mit einer Koppelhülse am unteren Ende, einen auf das Pipettierrohr aufgeschobenen O-Ring aus elastisch verformbarem Material und eine auf das Pipettierrohr aufgeschobene Hülse aufweist. Die Hülse dient zur axialen Quetschung des O-Ringes, sodass sich dieser radial verformt und abdichtend in eine Ringnut am Innenumfang der Pipettenspitze eingreift. Zum Lösen der Pipettenspitze kann der O-Ring entlastet werden. Zum Halten der Pipettenspitze auf dem Ansatz in einer vorbestimmten Stellung weisen Ansatz und Pipettenspitze zusammenwirkende Axialpositionierungsmittel auf. Dadurch, dass der O-Ring in eine Ringnut der Pipettenspitze eingreift, werden die aneinander anliegenden Axialpositionierungsmittel vorgespannt. Zum Abwerfen der Pipettenspitze ist ein beweglicher Abwerfer vorgesehen, der als die Hülse umschließendes Abwerferrohr ausgebildet ist. Der Abwerfer ist hydraulisch oder elektromotorisch betätigbar oder mittels einer Vorspannfeder, die beim Aufsetzen der Pipettenspitze auf die Pipettiereinheit gespannt wird. Die Betätigungsmittel zum Festklemmen und Lösen der Pipettenspitze am Ansatz sind aufwendig und haben einen hohen Platzbedarf. Das Anbringen der Pipettenspitzen in der definierten Kopplungsstellung kann leicht durch Fertigungstoleranzen oder eine ungenaue Positionierung der Pipettenspitze auf dem Ansatz verhindert werden. Die Ringnut und die Axialpositionierungsmittel schränken den Einsatz verschiedener Pipettenspitzen ein.

Die WO 2007/022667 A1 beschreibt eine automatische Mehrkanalpipette, die mit einem Roboterpositionierer zusammenarbeitet.

Die US 2012/0258026 A1 beschreibt eine Dichtanordnung für Pipettenspitzen einer Mehrkanal-Dosiervorrichtung. Die Mehrkanal-Dosiervorrichtung weist eine Vielzahl Öffnungen in einer Ebene auf. Eine Dichtplatte mit Löchern im Raster der Öffnungen stößt an dieser Ebene an. Jede Pipettenspitze ist mit einem kreisringförmigen Kragen versehen, der eine Anlageseite hat und durch Kraftschluss gegen die Dichtplatte gedrückt wird, um ein Loch zu umschließen.

Die DE 100 22 693 C1 beschreibt einen Pipettierautomaten mit einem einreihigen Mehrkanal-Pipettierkopf. Dieser weist einen Spitzenabwurfmechanismus auf, mit dem die auf in einer Reihe angeordneten Pipetten steckenden Pipettenspitzen nacheinander entfernt werden.

Davon ausgehend liegt der Erfindung die Aufgabe zugrunde, einen Dosierkopf mit einer großen Anzahl Ansätze, insbesondere 96 oder 384 Ansätze, zum gleichzeitigen Aufnehmen einer großen Anzahl Pipettenspitzen zur Verfügung zu stellen, der mit verringertem baulichen Aufwand ein sicheres automatisches Aufnehmen und Lösen von verschieden ausgebildeten Pipettenspitzen ermöglicht.

Die Aufgabe wird durch einen Dosierkopf mit den Merkmalen von Anspruch 1 gelöst. Vorteilhafte Ausführungsarten der Erfindung sind in Unteransprüchen angegeben.

Der erfindungsgemäße Dosierkopf für eine Dosiervorrichtung umfasst:
- mindestens einen Ansatz, der folgende Merkmale aufweist:
- ein Rohr mit einem nach außen vorstehenden zumindest teilweise umlaufenden Stützvorsprung am unteren Ende,
- mindestens eine Hülse mit einer umlaufenden Verjüngung am unteren Ende, die das Rohr umschließt und auf dem Rohr axial verlagerbar ist,
- mindestens einen elastomeren O-Ring, der das Rohr umschließt und neben der Verjüngung angeordnet ist, und
- die Hülse ist zwischen einer Freigabestellung in einem ersten Abstand von den Stützvorsprüngen und einer Klemmstellung in einem den ersten Abstand unterschreitenden, zweiten Abstand von den Stützvorsprüngen verlagerbar, in der Klemmstellung ist die Hülse mit der Verjüngung in dem benachbarten elastomeren O-Ring hineingepresst und ist der elastomere O-Ring aufgeweitet, um eine auf Ansätze aufgeschobene Pipettenspitze festzuklemmen,
gekennzeichnet durch
- einen Träger, an dem nebeneinander eine Vielzahl paralleler Ansätze zum Aufnehmen von Pipettenspitzen angeordnet ist,
- eine Anschlagplatte, die eine Vielzahl erster Löcher aufweist, durch die sich die Ansätze hindurch erstrecken,
- eine erste Verlagerungseinrichtung, die mit den Hülsen sämtlicher Ansätze gekoppelt und ausgebildet ist, die Hülsen zwischen der Freigabestellung und der Klemmstellung zu verlagern,
- eine zweite Verlagerungseinrichtung, die mit der Anschlagplatte verbunden und ausgebildet ist, die Anschlagplatte zwischen einer Anschlagstellung in einem ersten Abstand von den Stützvorsprüngen und einer Abwurfstellung in einem zweiten Abstand von den Stützvorsprüngen, der den ersten Abstand unterschreitet, zu verlagern, um in der Anschlagstellung Pipettenspitzen bis zur Anlage an der Anschlagplatte auf die Ansätze aufzuschieben und durch Verlagern der Anschlagplatte aus der Anschlagstellung in die Abwurfstellung von den Ansätzen abzuwerfen,
- wobei die zweite Verlagerungseinrichtung schwenkbar auf dem Träger gelagerte Kipphebel, mit den Hülsen gekoppelte Übertragungsachsen, die jeweils an einem Ende eines Kipphebels angreifen, und fest mit der Anschlagplatte verbundene, jeweils an einem anderen Ende eines Kipphebels anliegende Abwurfachsen aufweist, sodass beim Verlagern der Hülsen in die Freigabestellung die Übertragungsachsen die Kipphebel schwenken und diese über die Abwurfachsen die Anschlagplatte aus der Anschlagstellung in die Abwurfstellung drücken.

Bei dem erfindungsgemäßen Dosierkopf werden mittels der ersten Verlagerungseinrichtung sämtliche Hülsen gleichzeitig verlagert. Durch Verlagern der Hülsen von der Freigabestellung in die Klemmstellung können somit sämtliche O-Ringe aufgeweitet und hierdurch auf die Ansätze aufgeschobene Pipettenspitzen an den Ansätzen fixiert werden. Umgekehrt können durch Verlagern der Hülsen aus der Klemmstellung in die Freigabestellung sämtliche O-Ringe entspannt und hierdurch die Klemmung der Pipettenspitzen auf den Ansätzen gelöst werden. Ein simultanes Festklemmen einer großen Anzahl Pipettenspitzen wird durch das simultane Verlagern sämtlicher Hülsen in die Klemmstellung und ein simultanes Lösen der Pipettenspitzen durch das Verlagern sämtlicher Hülsen in die Freigabestellung ermöglicht. Die Erfindung eignet sich insbesondere für Dosierköpfe mit 96 oder 384 Ansätzen. Die Kraftübertragung von der ersten Verstelleinrichtung auf die Hülsen begünstigt eine verhältnismäßig einfache, kompakte und leichte Bauweise. Infolgedessen kann auch der bauliche Aufwand einer mit dem Dosierkopf auszurüstenden Dosiervorrichtung reduziert werden. Das Festklemmen durch Aufweiten der O-Ringe begünstigt den Einsatz von Pipettenspitzen mit unterschiedlichen Formen und Abmessungen. Die Erfindung umfasst Ausführungsarten, bei denen jeder Ansatz nur einen einzigen O-Ring und nur eine einzige Hülse aufweist. Ferner umfasst die Erfindung Ausführungsarten, bei denen jeder Ansatz mehrere O-Ringe und mehrere Hülsen aufweist.

Durch die Anschlagplatte wird erreicht, dass sämtliche Pipettenspitzen simultan in eine vorgegebene Position auf die Ansätze aufgeschoben werden. Hierfür kann der Dosierkopf mit den Ansätzen in eine bereitgestellte Gruppe Pipettenspitzen eingesetzt werden, bis die Anschlagplatte auf dem oberen Rand der Pipettenspitzen aufsitzt.

Die zweite Verlagerungseinrichtung ist mit der Anschlagplatte verbunden und ausgebildet, die Anschlagplatte zwischen einer Anschlagstellung in einem ersten Abstand von den Stützvorsprüngen und einer Abwurfstellung in einem zweiten Abstand von den Stützvorsprüngen, der den ersten Abstand unterschreitet, zu verlagern, um in der Anschlagstellung Pipettenspitzen bis zur Anlage an der Anschlagplatte auf die Ansätze aufzuschieben und durch Verlagern der Anschlagplatte aus der Anschlagstellung in die Abwurfstellung von den Ansätzen abzuwerfen. Hierdurch wird das Abwerfen der Pipettenspitzen von den Ansätzen auch dann gewährleistet, wenn die O-Ringe nach Entlastung durch die Hülsen noch an den Innenseiten der Pipettenspitzen anliegen und diese festhalten. Die Anschlagplatte ist eine Abwurfplatte. Insbesondere können die Pipettenspitzen nach Entlastung der Hülsen an den O-Ringen haftenbleiben ("festkleben"), sodass sie nicht ohne weiteres herunterfallen.

Die zweite Verlagerungseinrichtung umfasst schwenkbar auf dem Träger gelagerte Kipphebel, mit den Hülsen gekoppelte Übertragungsachsen, die jeweils an einem Ende eines Kipphebels anliegen, und fest mit der Anschlagplatte verbundene, jeweils an einem anderen Ende des Kipphebels anliegende Abwurfachsen, sodass beim Verlagern der Hülsen in die Freigabestellung die Übertragungsachsen die Kipphebel schwenken und diese über die Abwurfachsen die Anschlagplatte aus der Anschlagstellung in die Abwurfstellung drücken. Bei dieser Ausführungsart wird vorteilhaft die Bewegung der Hülsen zum Entlasten der O-Ringe für das Verlagern der Anschlagplatte in die Abwurfstellung genutzt. Hierdurch wird Aufwand für die zweite Verlagerungseinrichtung reduziert. Zudem werden die beim Abwerfen der Pipettenspitzen auftretenden Kräfte vom Dosierkopf aufgefangen.

Ansätze im Sinne der Erfindung sind gemäß einer bevorzugten Ausführungsart als konischer, zylindrischer oder teils konischer und teils zylindrischer Vorsprung bezüglich des Gehäuses oder eines anderen Trägers ausgebildet. Vorzugsweise sind die Ansätze fest mit dem Träger des Dosierkopfes verbunden.

Die O-Ringe haben gemäß einer bevorzugten Ausführungsart im Längsschnitt eine kreisrunde Form, sodass sie insgesamt die geometrische Form eines Torus aufweisen. Die Erfindung umfasst aber auch Ausführungsarten, bei denen die O-Ringe im Längsschnitt eine mehreckige, elliptische oder eine andere Form aufweisen.

Gemäß einer bevorzugten Ausführungsart bestehen die elastomeren O-Ringe aus Gummi, Silikon oder thermoplastischem Elastomer.

Hülsen im Sinne der Erfindung können sowohl lange hohlzylindrische Körper sein, bei denen die Länge den Innendurchmesser übersteigt, als auch kurze hohlzylindrische Körper, bei denen die Länge geringer als der Innendurchmesser ist. Insbesondere sind auch ringförmige Körper Hülsen im Sinne von Anspruch 1 und 2. Die ringförmigen Körper können verschiedene Querschnittsformen aufweisen. Insbesondere können die ringförmigen Körper in einem Längsschnitt eine mehreckige, elliptische oder kreisrunde Form aufweisen. Wenn die ringförmigen Körper in einem Längsschnitt eine kreisrunde Form aufweist, haben sie insgesamt die geometrische Form eines Torus.

Verjüngungen im Sinne der Erfindung sind allgemein zum unteren Ende der Hülse hin sich verjüngende Rotationsflächen. Gemäß bevorzugter Ausführungsarten weisen die Verjüngungen mindestens eine der nachfolgenden Geometrien auf: Kegelstumpffläche ("Fase") oder Kugelzone. Kombinationen der vorgenannten Geometrien sind ebenfalls Verjüngungen im Sinne der Erfindung.

Die erste Verlagerungseinrichtung ist so ausgebildet, dass sie in der Lage ist, die Hülsen aus der Freigabestellung in die Klemmstellung zu verlagern und die Hülsen aus der Klemmstellung in die Freigabestellung zu verlagern. Bei dem Dosierkopf von Anspruch 3 ist in der Freigabestellung der Hülsen auch die Druckplatte in einer Freigabestellung angeordnet und ist in der Klemmstellung der Hülsen auch die Druckplatte in einer Klemmstellung angeordnet.

Die Erfindung umfasst Ausführungsarten, bei denen die Verlagerung der Hülsen aus der Klemmstellung in die Freigabestellung dadurch erfolgt, dass die erste Verlagerungseinrichtung die Hülsen entlastet, sodass sie aufgrund der Rückstellkräfte der O-Ringe aus der Klemmstellung in die Freigabestellung verlagert werden. Hierbei ist die erste Verlagerungseinrichtung z.B. durch die Druckplatte und die dritte Verlagerungseinrichtung gemäß Anspruch 3 gebildet. Ferner umfasst die Erfindung Ausführungsarten, bei denen die erste Verlagerungseinrichtung die Hülsen aktiv aus der Klemmstellung in die Freigabestellung verlagert.

Gemäß einer bevorzugten Ausführungsart des Dosierkopfes weist jeder Ansatz folgende Merkmale auf:
- eine erste Hülse mit einer umlaufenden ersten Verjüngung am unteren Ende, die das Rohr umschließt und auf dem Rohr axial verlagerbar ist,
- einen elastomeren ersten O-Ring, der das Rohr umschließt und neben der ersten Verjüngung angeordnet ist,
- eine zweite Hülse mit einer umlaufenden zweiten Verjüngung am unteren Ende, die oberhalb der ersten Hülse das Rohr umschließt und auf dem Rohr axial verlagerbar ist,
- einen elastomeren zweiten O-Ring, der das Rohr umschließt, neben der zweiten Verjüngung angeordnet ist und unten an der ersten Hülse abgestützt ist,
- wobei in der Klemmstellung die zweiten Hülsen mit den zweiten Verjüngungen in die benachbarten elastomeren zweiten O-Ringe hineingepresst und die ersten Hülsen mit den ersten Verjüngungen in die benachbarten elastomeren ersten O-Ringe hineingepresst sind und die elastomeren ersten und zweiten O-Ringe aufgeweitet sind, um auf die Ansätze aufgeschobene Pipettenspitzen festzuklemmen, und
- ist eine zweite Verlagerungseinrichtung mit den ersten und zweiten Hülsen sämtlicher Ansätze gekoppelt und ausgebildet, die ersten und zweiten Hülsen zwischen der Freigabestellung und der Klemmstellung zu verlagern.

Bei dem Dosierkopf weist jeder Ansatz einen ersten O-Ring und einen zweiten O-Ring auf, die durch Einpressen einer ersten Hülse und einer zweiten Hülse aufweitbar und damit in einer Pipettenspitze festklemmbar sind. Umgekehrt kann die Klemmung des ersten O-Ringes und des zweiten O-Ringes in der Pipettenspitze gelöst werden. Dadurch, dass jede Pipettenspitze mittels zweier O-Ringe an einem Ansatz festgeklemmt ist, wird eine genaue Ausrichtung einer großen Anzahl Pipettenspitzen ermöglicht. Diese Ausführungsart eignet sich insbesondere für Dosierköpfe mit 96 oder 384 Ansätzen, bei denen die Pipettenspitzen möglichst parallel ausgerichtet sein müssen, damit sie gleichzeitig in eine entsprechende Anzahl verschiedener Aufnahmen eingeführt werden können. Zudem werden durch Einsatz zweier O-Ringe die zum Festklemmen erforderlichen Kräfte reduziert. Dies begünstigt eine verhältnismäßig einfache, kompakte und leichte Bauweise. Infolgedessen kann auch der bauliche Aufwand einer mit dem Dosierkopf auszurüstenden Dosiervorrichtung reduziert werden. Ferner begünstigt die Fixierung mittels zweier O-Ringe die Verwendung von Pipettenspitzen mit unterschiedlichen Formen und Abmessungen.

Gemäß einer bevorzugten Ausführungsart umfasst der Dosierkopf:
- eine oberhalb der Hülsen angeordnete Druckplatte mit einer Vielzahl zweiter Löcher, durch die sich die Rohre hindurch erstrecken, wobei die Druckplatte entlang der Rohre zwischen einer Freigabestellung in einem ersten Abstand von den Stützvorsprüngen in eine Klemmstellung in einem den ersten Abstand unterschreitenden, zweiten Abstand von den Stützvorsprüngen verlagerbar ist, die Druckplatte in der Klemmstellung so gegen den oberen Rand der benachbarten Hülsen sämtlicher Ansätze drückt, dass die Hülsen in die benachbarten elastomeren O-Ringe hineingepresst und die elastomeren O-Ringe aufgeweitet sind, um auf die Ansätze aufgeschobene Pipettenspitzen festzuklemmen,
- eine dritte Verlagerungseinrichtung, die mit der Druckplatte verbunden ist und ausgebildet ist, die Druckplatte zwischen der Freigabestellung und der Klemmstellung zu verlagern.

Bei dieser Ausführungsart bilden die Druckplatte und die dritte Verlagerungseinrichtung gemeinsam die erste Verlagerungseinrichtung. Die Druckplatte ermöglicht ein simultanes Verlagern der Hülsen in die Klemmstellung zum Festklemmen von Pipettenspitzen und ein simultanes Verlagern der Hülsen in die Freigabestellung zum Lösen der Pipettenspitzen. Sie begünstigt eine besonders einfache, kompakte und leichte Bauweise. Es kann sowohl bei Ansätzen mit jeweils nur einer Hülse als auch bei Ansätzen mit mehreren Hülsen verwendet werden. Die Anschlagplatte ist unterhalb der Druckplatte angeordnet.

Von der Erfindung sind Ausführungsarten umfasst, bei denen die Hülsen zwischen der Freigabestellung und der Klemmstellung mittels anderer Verlagerungseinrichtungen verstellbar sind. Insbesondere umfasst die Erfindung Ausführungsarten, bei denen die jeweils oben auf dem Ansatz angeordnete Hülse auf ein Stellgewinde des Ansatzes aufgeschraubt ist und mittels eines angekoppelten Getriebemechanismus auf dem Ansatz drehbar ist, z.B. wie in der EP 0 337 726 A2 beschrieben. Vorzugsweise ist die Verlagerungseinrichtung so ausgebildet, dass die Hülsen oben jeweils drehfest mit einem Zahnrad verbunden sind und eine Zahnstange mit den Zahnrädern mehrere Hülsen kämmt, die in einer Reihe angeordnet sind. Die Zahnstangen werden wiederum über ein Zahnrad angetrieben, das fest auf der Motorwelle eines Elektromotors angeordnet sein kann. Falls die Hülsen in mehreren Reihen angeordnet sind, können die Hülsen jeder Reihe durch eine Zahnstange und einen eigenen Elektromotor angetrieben werden. Alternativ werden mehrere Zahnstangen für mehrere Reihen Hülsen über ein Zahnradgetriebe von einem einzigen Elektromotor angetrieben. Die Übertragungsachsen können direkt an den oberen Rändern von Hülsen anliegen. Auch ist es möglich, dass die Übertragungsachsen sich über ein streifenförmiges oder plattenförmiges Übertragungselement mit Löchern, durch die die Ansätze hindurchgeführt sind, jeweils an den oberen Rändern mehrere Hülsen abstützen.

Gemäß einer weiteren Ausführungsart ist zwischen der Anschlagplatte und dem Träger eine Federeinrichtung vorhanden, welche die Anschlagplatte in die Anschlagposition zurückverlagert, wenn die Hülsen aus der Freigabestellung in die Klemmstellung verlagert werden. Dies ist vorteilhaft, weil die Kipphebel beim Absenken der Druckplatte von den Übertragungsachsen nicht zurückgeschwenkt werden. Gemäß einer bevorzugten Ausführungsart weist der Träger mindestens eine Anschlageinrichtung auf, an der die Anschlagplatte in Anschlagposition anliegt, sodass sie nicht weiter zum Träger hin verlagert werden kann. Bei einer einfachen Ausführungsart ist die Anschlageinrichtung gebildet von zumindest drei Anschlagelementen, die von der Unterseite des Trägers nach unten vorstehen, sodass die Oberseite der Anschlagplatte in der Anschlagposition zur Anlage an den Anschlagelementen kommt.

Der Dosierkopf ist bevorzugt so ausgebildet, dass die zum Aufweiten der O-Ringe auftretenden Kräfte im Dosierkopf verbleiben und eine mit dem Dosierkopf zu verbindende Dosiervorrichtung nicht belasten. Hierfür stützt sich gemäß einer bevorzugten Ausführungsart die erste Verlagerungseinrichtung und/oder die zweite Verlagerungseinrichtung am Träger ab. Hierfür ist z.B. die erste oder zweite Verlagerungseinrichtung am Träger gehalten oder festgelegt. Durch die Abstützung der ersten und/oder zweiten Verlagerungseinrichtung am Träger werden die auf die Verlagerungseinrichtung wirkenden Reaktionskräfte beim Verlagern der Hülsen in den Träger abgeleitet. Die auf die O-Ringe beim Einpressen der Hülsen wirkenden Reaktionskräfte werden über die Stützvorsprünge und die Ansätze ebenfalls in den Träger abgeleitet. Infolgedessen verbleiben die beim Aufweiten der O-Ringe auftretenden Kräfte im Dosierkopf.

Gemäß einer bevorzugten Ausführungsart unterschreitet der Innendurchmesser des ersten O-Ringes den Innendurchmesser des zweiten O-Ringes und unterschreitet der Außendurchmesser des ersten O-Ringes den Außendurchmesser des zweiten O-Ringes. Diese Angaben beziehen sich auf den unverformten Zustand des ersten O-Ringes und des zweiten O-Ringes. Diese Ausführungsart begünstigt ein Festklemmen von Pipettenspitzen mit einer Aufweitung am oberen Ende auf den Ansätzen. Die Aufweitung erleichtert die Einführung der Ansätze in die Pipettenspitzen.

Gemäß einer weiteren Ausführungsart ist der erste O-Ring am Innenumfang auf dem Rohr geführt und der zweite O-Ring am Innenumfang auf einem darin eingreifenden Ende der zweiten Hülse geführt. Hierdurch werden der erste O-Ring und der zweite O-Ring vorteilhaft auf dem Ansatz zentriert.

Gemäß einer bevorzugten Ausführungsart ist der Stützvorsprung ein um das untere Ende des Rohrs umlaufender Stützring. Der Stützring kann fertigungstechnisch vorteilhaft mit dem Rohr zusammengefügt werden. Gemäß einer weiteren Ausführungsart verjüngt sich der Stützring zu seinem unteren Ende hin. Hierdurch wird das Einführen des Ansatzes in die Aufstecköffnung einer Pipettenspitze erleichtert.

Gemäß einer bevorzugten Ausführungsart ist die Druckplatte unterhalb des Trägers angeordnet. Dann kann die Druckplatte direkt an umlaufenden oberen Rändern der Hülsen anliegen. Die Druckplatte kann aber auch oberhalb des Trägers angeordnet sein und an Verlängerungen der Hülsen anliegen, die Durchgangsöffnungen des Trägers durchgreifen.

Gemäß einer bevorzugten Ausführungsart weist die dritte Verlagerungseinrichtung mindestens eine Führungsachse auf, die unten mit der Druckplatte verbunden ist und oben über ein Exzentergetriebe mit einem Elektromotor gekoppelt ist. Dies ermöglicht eine baulich besonders einfache und präzise dritte Verlagerungseinrichtung.

Gemäß einer weiteren Ausführungsart sind vier Führungsachsen am unteren Ende mit der Druckplatte fest verbunden und am oberen Ende über mindestens ein Exzentergetriebe mit mindestens einem Elektromotor gekoppelt. Hierdurch wird mit geringem baulichem Aufwand eine genaue Parallelführung der Druckplatte erreicht.

Gemäß einer weiteren Ausführungsart ist jede Führungsachse in einem Kugelumlauflager gelagert, das im Träger gehalten ist. Hierdurch wird eine besonders reibungsarme und präzise erste Verlagerungseinrichtung erreicht.

Gemäß einer weiteren Ausführungsart weist jede Führungsachse am oberen Ende eine senkrecht zur Führungsachse erstreckte Kulisse auf, greift ein Exzenter an einer senkrecht zur Führungsachse und zur Kulisse gerichteten ersten Welle in die Kulisse ein und ist die erste Welle mit einem Elektromotor gekoppelt. Hierdurch wird in besonders einfacher und reibungsarmer Weise die Drehbewegung eines Elektromotors in die Axialbewegung mindestens einer Führungsachse umgesetzt.

Gemäß einer bevorzugten Ausführungsart trägt jeder Exzenter ein Kugellager, das in einer Kulisse geführt ist. Hierdurch wird eine besonders reibungsarme Kraftübertragung von Exzenter auf die Führungsachsen erreicht.

Gemäß einer bevorzugten Ausführungsart ist ein einziger Elektromotor über ein Getriebe mit sämtlichen ersten Wellen gekoppelt. Hierdurch wird ein besonders einfache, raum- und gewichtssparende Bauweise erreicht. Eine Synchronisierung mehrerer Elektromotoren für einen Gleichlauf der Führungsachsen erübrigt sich. Gemäß einer bevorzugten Ausführungsart ist das Getriebe ein Schneckengetriebe.

Gemäß einer bevorzugten Ausführungsart sind mehrere erste Wellen parallel zueinander angeordnet und jeweils drehfest mit einem ersten Schneckenrad verbunden, fluchten die ersten Schneckenräder miteinander, ist in derselben Ebene wie die ersten Schneckenräder eine zweite Welle angeordnet, ist die zweite Welle drehfest mit ersten Schnecken verbunden, wobei jeweils eine erste Schnecke mit einem ersten Schneckenrad kämmt, und ist die zweite Welle mit dem Elektromotor gekoppelt. Dies ermöglicht einen platz- und gewichtssparenden Aufbau. Gemäß einer weiteren Ausführungsart ist die zweite Welle drehfest mit einem zweiten Schneckenrad verbunden und ist die Motorwelle des Elektromotors drehfest mit einer zweiten Schnecke verbunden, die mit dem zweiten Schneckenrad kämmt. Dies begünstigt einen platz- und gewichtssparenden Aufbau.

Gemäß einer weiteren Ausführungsart ist der mindestens eine Elektromotor mit einer elektrischen Steuerungseinrichtung gekoppelt, die den Elektromotor so steuert, dass die Druckplatte zwischen der Freigabestellung und der Klemmstellung verlagerbar ist.

Gemäß einer weiteren Ausführungsart ist der mindestens eine Elektromotor mit einem Drehwinkelgeber gekoppelt, der mit der elektrischen Steuerungseinrichtung verbunden ist, die ausgebildet ist, die Lage der Druckplatte in Abhängigkeit von der mittels des Drehwinkelgebers erfassten Drehstellung der Motorwelle des Elektromotors zu ermitteln. Diese Ausführungsart gewährleistet eine besonders präzise Verlagerung der Druckplatte zwischen der Freigabestellung und der Klemmstellung.

Gemäß einer weiteren Ausführungsart sitzt auf jedem Rohr neben der Druckplatte ein Ausgleichsring und drückt die Druckplatte über den Ausgleichsring gegen das obere Ende der benachbarten Hülse. Hierdurch wird eine kompakte Bauweise begünstigt, da die Druckplatte nahe an die Anschlagplatte heran verlagert werden kann.

Gemäß einer weiteren Ausführungsart weisen die Hülsen oben eine ebene Stirnfläche auf, an der die Druckplatte oder der zweite O-Ring oder der Ausgleichsring anliegt. Hierdurch wird eine vorteilhafte Kraftübertragung zwischen den Hülsen und den O-Ringen erreicht.

Gemäß einer weiteren Ausführungsart sind auf den Ansätzen des Dosierkopfes Pipettenspitzen angeordnet und durch Aufweiten der O-Ringe festgeklemmt. Die Pipettenspitzen sind jeweils Röhrchen mit einer Spitzenöffnung am unteren Ende und einer Aufstecköffnung am oberen Ende. Der Innendurchmesser und der Außendurchmesser der Pipettenspitze vergrößert sich im Allgemeinen von der Spitzenöffnung zur Aufstecköffnung hin. Gemäß einer bevorzugten Ausführungsart liegen die oberen Ränder der Pipettenspitzen an der Unterseite der Anschlagplatte an.

Gemäß einer bevorzugten Ausführungsart umfasst der Dosierkopf mindestens eine Verdrängungseinrichtung, die mit den Verbindungslöchern der Ansätze kommunizierend verbunden ist. Hierfür erstrecken sich Kanäle von einem Zylinder oder einer anderen Verdrängungskammer der Verdrängungseinrichtung durch die Ansätze hindurch bis zu den Verbindungslöchern der Ansätze. Gemäß einer bevorzugten Ausführungsart umfasst der Dosierkopf eine Vielzahl Verdrängungseinrichtungen, wobei die Verdrängungskammer jeder Verdrängungseinrichtung mit dem Verbindungsloch eines einzigen Ansatzes kommunizierend verbunden ist. Gemäß einer bevorzugten Ausführungsart ist jede Verdrängungseinrichtung ein Zylinder mit einem darin verschieblichen Kolben. Alternativ ist jede Verdrängungseinrichtung eine Verdrängungskammer mindestens einer verformbaren Wand.

Ferner liegt der Erfindung die Aufgabe zugrunde, eine Dosiervorrichtung mit einer großen Anzahl Ansätze, insbesondere 96 oder 384 Ansätze, zum gleichzeitigen Aufnehmen einer großen Anzahl Pipettenspitzen zur Verfügung zu stellen, die mit verringertem baulichen Aufwand ein sicheres automatisches Aufnehmen und Lösen von verschieden ausgebildeten Pipettenspitzen ermöglicht.

Die Aufgabe wird durch eine Dosiervorrichtung mit den Merkmalen von Anspruch 10 gelöst. Vorteilhafte Ausgestaltungen der Dosiervorrichtung sind in Unteransprüchen angegeben.

Gemäß Anspruch 10 umfasst die Dosiervorrichtung einen Dosierkopf zum Dosieren von Flüssigkeiten der vorbeschriebenen Art, insbesondere einen Dosierkopf gemäß einem der Ansprüche 1 bis 9.

Aufgrund der vergleichsweise geringen Baugröße, des geringen Gewichts des erfindungsgemäßen Dosierkopfes und des verringerten Kraftaufwandes für das Festklemmen von Pipettenspitzen und Lösen der Pipettenspitzen von dem Dosierkopf kann der bauliche Aufwand für die Dosiervorrichtung verringert werden. Die Dosiervorrichtung kann für besonders geringe Belastungen ausgelegt werden, wenn der Dosierkopf so ausgebildet ist, dass beim Aufweiten der O-Ringe auftretende Kräfte im Dosierkopf verbleiben.

Gemäß einer bevorzugten Ausführungsart ist die Dosiervorrichtung eine Dosierstation, ein Dosierautomat oder Laborautomat. Gemäß einer bevorzugten Ausführungsart ist die Dosierstation, der Dosierautomat oder Laborautomat mit einem Dosierkopf mit 96 Ansätzen für 96 Pipettenspitzen oder mit einem Dosierkopf mit 384 Ansätzen für 384 Pipettenspitzen ausgerüstet.

Gemäß einer weiteren Ausführungsart ist die Dosiervorrichtung eine manuell oder elektromotorisch angetriebene, handhabbare Mehrkanalpipette, die vom Anwender beim Dosieren in der Hand gehalten werden kann. Die Mehrkanalpipette weist vorzugsweise acht Ansätze für acht Pipettenspitzen oder ein ganzzahliges Mehrfaches von acht Ansätzen für eine entsprechende Anzahl Pipettenspitzen auf.

Gemäß einer bevorzugten Ausführungsart umfasst die Dosierstation, der Dosierautomat oder der Laborautomat mindestens eine der nachstehenden Einrichtungen:
- mindestens einen Halter mit einer Vielzahl darin gehaltener Pipettenspitzen,
- mindestens ein Probengefäß zum Bereitstellen von flüssigen Proben,
- mindestens ein Reagenzgefäß zum Bereitstellen von Reagenzien,
- mindestens einen Abfallbehälter zum Aufnehmen gebrauchter Pipettenspitzen.

Gemäß einer bevorzugten Ausführungsart der Dosierstation, des Dosierautomaten oder des Laborautomaten ist der Dosierkopf an einem Dreiachsübertrager gehalten, der ausgebildet ist, den Dosierkopf entlang von drei Achsen im Raum zu verlagern.

Ferner liegt der Erfindung die Aufgabe zugrunde, ein Verfahren zum Dosieren von Flüssigkeiten mit einem Dosierkopf zu schaffen, bei dem gleichzeitig eine große Anzahl Pipettenspitzen, insbesondere 96 oder 384 Pipettenspitzen, insbesondere verschieden ausgebildete Pipettenspitzen, unter verringertem baulichen Aufwand sicher automatisch aufgenommen und gelöst werden können.

Die Aufgabe wird durch ein Verfahren zum Dosieren von Flüssigkeiten gemäß Anspruch 15 gelöst. Vorteilhafte Ausführungsarten der Erfindung sind in Unteransprüchen angegeben.

Bei dem erfindungsgemäßen Verfahren zum Dosieren von Flüssigkeiten werden die Flüssigkeiten mittels eines Dosierkopfes der vorbeschriebenen Art, insbesondere mittels eines Dosierkopfes gemäß einem der Ansprüche 1 bis 18, dosiert. Das erfindungsgemäße Verfahren verwendet den erfindungsgemäßen Dosierkopf. Es macht sich die Vorteile zunutze, die dem Dosierkopf gemäß obigen Erläuterungen zukommen.

Gemäß einer bevorzugten Ausführungsart des Verfahrens werden
- eine Gruppe Pipettenspitzen in einem Halter für Pipettenspitzen bereitgestellt,
- die Hülsen in die Freigabestellung verlagert,
- der Dosierkopf mit den Ansätzen in die Aufstecköffnungen der bereitgestellten Pipettenspitzen eingeführt, sodass die elastomeren O-Ringe in die bereitgestellten Pipettenspitzen eintauchen,
- die Hülsen in die Klemmstellung gebracht und hierdurch die Pipettenspitzen auf den Ansätzen festgeklemmt,
- der Dosierkopf angehoben und die darauf festgeklemmten Pipettenspitzen aus dem Halter entnommen,
- mit den auf den Ansätzen des Dosierkopfes festgeklemmten Pipettenspitzen Dosierungen durchgeführt,
- die Pipettenspitzen durch Verlagern der Hülsen aus der Klemmstellung in die Freigabestellung von den Ansätzen freigegeben.

Gemäß einer bevorzugten Ausführungsart wird eine Dosierstation, ein Dosierautomat oder ein Laborautomat mit dem Dosierkopf ausgerüstet und die Verlagerungen des Dosierkopfes durch einen Dreiachsübertrager des Dosierautomaten oder Laborautomaten durchgeführt.

Gemäß einer weiteren Ausführungsart wird der Dosierkopf mit einer elektrischen Steuerungseinrichtung des Dosierautomaten oder Laborautomaten gekoppelt und die Verlagerungen der ersten oder zweiten Verlagerungseinrichtung des Dosierkopfes durch die elektronische Steuerungseinrichtung gesteuert.

Gemäß einer weiteren Ausführungsart wird vor dem Absenken der Ansätze in die Pipettenspitzen die Anschlagplatte in die Anschlagstellung gebracht und die Ansätze in die Pipettenspitzen eingetaucht, bis die oberen Enden der Pipettenspitzen an der Anschlagplatte anliegen, danach die Pipettenspitzen durch Verlagern der Hülsen aus der Freigabestellung in die Klemmstellung an den Ansätzen festgeklemmt und nach Durchführen der Dosierungen die Pipettenspitzen durch Verlagern der Hülsen aus der Klemmstellung in die Freigabestellung und durch Verlagern der Anschlagplatte aus der Anschlagstellung in die Abwurfstellung von den Ansätzen gelöst.

Gemäß einer weiteren Ausführungsart wird mit den Pipettenspitzen an dem Dosierkopf Flüssigkeit aus Gefäßen aufgenommen und in Gefäße abgegeben.

Gemäß einer weiteren Ausführungsart wird der Dosierkopf vor dem Abwerfen der Pipettenspitzen von den Ansätzen über einen Abfallbehälter verlagert und die Pipettenspitzen in den Abfallbehälter abgeworfen.

Die Erfindung wird nachfolgend anhand der anliegenden Zeichnungen eines Ausführungsbeispiels erläutert. In den Zeichnungen zeigen:
- Fig. 1: einen Dosierkopf in einer Perspektivansicht schräg von vorn und von der Seite;
- Fig. 2: den Dosierkopf mit Pipettenspitzen in einer Perspektivansicht schräg von vorn und von der anderen Seite;
- Fig. 3: den Dosierkopf mit Pipettenspitzen in einer Perspektivansicht schräg von hinten und von der Seite;
- Fig. 4: einen Ansatz des Dosierkopfes eingeführt in einer Pipettenspitze vor dem Festklemmen der Pipettenspitze in einem Vertikalschnitt;
- Fig. 5: den Ansatz festgeklemmt in der Pipettenspitze in einem Vertikalschnitt;
- Fig. 6: den Dosierkopf mit einer festgeklemmten Pipettenspitze in einer teilweise geschnittenen Vorderansicht;
- Fig. 7: den Dosierkopf beim Abwerfen der Pipettenspitze in einer teilweise geschnittenen Vorderansicht;
- Fig. 8: ein Befestigungszapfen und Kolbenplatte umfassender oberer Teil des Dosierwerkzeuges in einem Vertikalschnitt;
- Fig. 9: den Dosierkopf in einem Dosierautomaten in einer Perspektivansicht schräg von oben und von der Seite.

In dieser Anmeldung beziehen sich die Angaben "oben" und "unten" auf eine Ausrichtung des Dosierkopfes mit den Ansätzen in vertikaler Richtung, wobei die Ansätze unten und die übrigen Teile des Dosierkopfes darüber angeordnet sind.

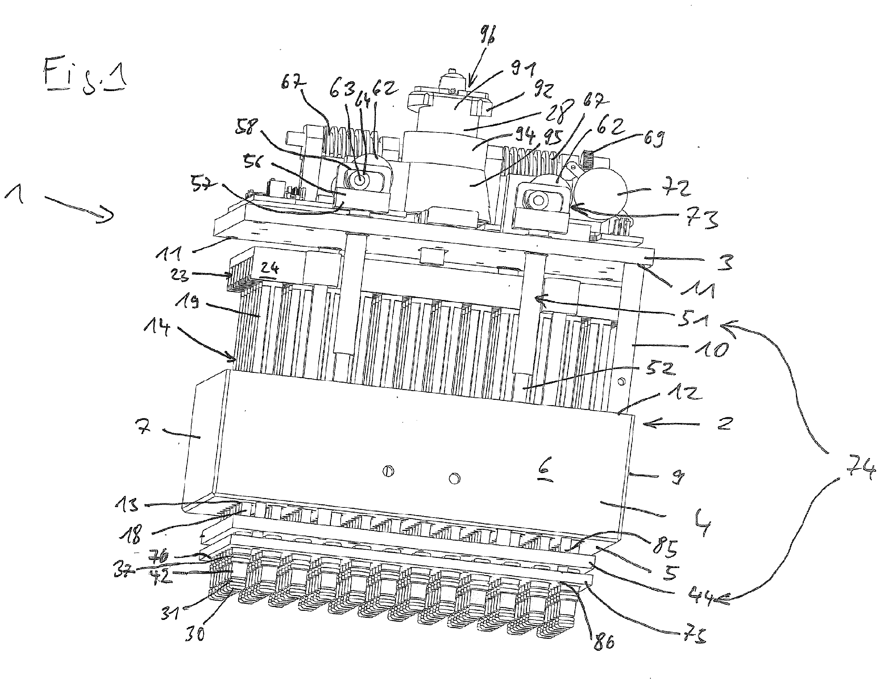

Gemäß Fig. 1 bis 3 umfasst ein Dosierkopf 1 einen mehrteiligen Träger 2, der eine rechteckige Trägerplatte 3 und darunter ein kastenförmiges, oben offenes Trägergehäuse 4 aufweist. Das Trägergehäuse 4 hat eine Bodenwand 5 und von den Rändern der Bodenwand 5 hochstehende Seitenwände 6, 7, 8, 9. Die Trägerplatte 3 ist parallel zur Bodenwand 5 ausgerichtet. Die Trägerplatte 3 ist durch Stehbolzen 10 in einem Abstand vom oberen Rand des Trägergehäuses 4 festgehalten. Die Enden der Stehbolzen 10 sind in ersten und zweiten Gewindebohrungen 11, 12 an den vier Ecken der Trägerplatte 3 und des oberen Randes des Trägergehäuses 4 eingeschraubt. Aus Vereinfachungsgründen ist nur ein Stehbolzen 10 gezeigt.

In der Bodenwand 5 sind in einer Rasteranordnung mit acht Reihen und zwölf Spalten insgesamt 96 dritte Gewindebohrungen 13 ausgebildet. Der Dosierkopf umfasst 96 parallele Kolben-Zylinder-Einheiten 14. Das Raster entspricht dem Raster von Vertiefungen einer Mikrotiterplatte gemäß SBS (Society for Biomolecular Screening)-Spezifikation. Jede Kolben-Zylinder-Einheit 14 weist einen Zylinder 15 und einen Kolben 16 auf. Jeder Zylinder 15 hat ein Außengewinde 17, das in eine der dritten Gewindebohrungen 13 eingeschraubt ist. Unten hat jeder Zylinder 15 ein Rohr 18, das von der Bodenwand 5 nach unten vorsteht.

In jeden Zylinder 15 ist am Umfang abdichtend und axial verschieblich ein Kolben 16 eingesetzt. Jeder Kolben 16 ist mit einer Kolbenstange 19 verbunden, die oben aus dem Zylinder 15 hinaussteht. Jede Kolbenstange 19 hat am oberen Ende einen Kolbenkopf 20 und darunter eine umlaufende Ringnut 21.

Unterhalb der Trägerplatte 3 ist eine zur Trägerplatte 3 parallele, rechteckige Kolbenplatte 22 angeordnet. Die Kolbenplatte 22 hat an der Unterseite acht nach unten geöffnete Kanäle 23, die parallel zu den Reihen aus dritten Gewindebohrungen 13 in der Bodenwand 5 verlaufen.

Jeder Kanal 23 ist durch zwei streifenförmige Kanalwände 24 und durch zwei von den unteren Enden der Kanalwände 24 nach innen vorstehende Kanalschultern 25 begrenzt. Die Kanalwände 24 an den beiden längsseitigen Rändern der Kolbenplatte 22 begrenzen jeweils nur auf einer Seite den benachbarten Kanal 23. Die übrigen Kanalwände 24 begrenzen jeweils zwei benachbarte Kanäle 22 auf einer Seite. Zwischen den Kanalschultern 25 hat jeder Kanal eine Schlitzöffnung 26.

An den kurzen Rändern der Kolbenplatte 22 haben die Kanäle 23 Stirnöffnungen 27. Durch die Stirnöffnungen 27 hindurch sind die Kolbenköpfe 20 der Kolbenstangen 19 in die Kanäle 23 eingeschoben, sodass die Kanalschultern 25 formschlüssig in die Ringnuten 21 eingreifen. Infolgedessen sind die Kolben 16 durch vertikales Verlagern der Kolbenplatte 22 in den Zylindern 15 verlagerbar.

Von der Oberseite der Trägerplatte 3 steht ein Befestigungszapfen 28 einer Bajonett-Verbindung nach oben vor. Zentral im Befestigungszapfen 28 ist eine axial verlagerbare Gewindemutter 29 angeordnet, deren unteres Ende fest mit der Kolbenplatte 22 verbunden ist, um die Kolbenplatte 22 in Axialrichtung der Zylinder 15 zu verlagern. Auf Einzelheiten des Befestigungszapfens 28 wird weiter unten eingegangen.

Jedes Rohr 18 hat am unteren Ende einen radial vorstehenden, umlaufenden Stützvorsprung 30. Dieser ist als auf dem Rohr fixierter Stützring ausgebildet.

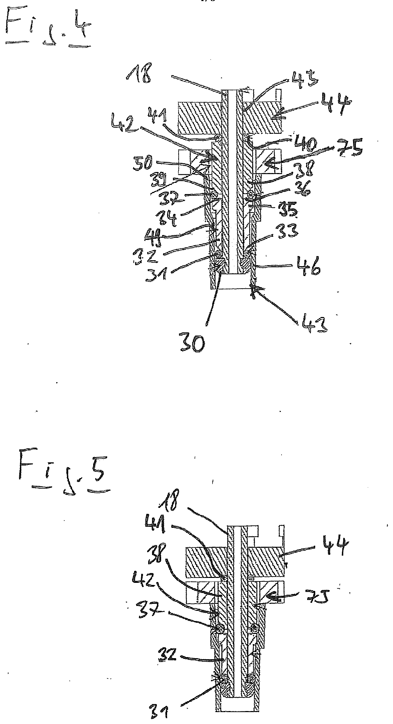

Gemäß Figur 4 ist auf dem Rohr 18 neben dem Stützvorsprung 30 ein erster O-Ring 31 aus einem elastomeren Material geführt. Über dem ersten O-Ring 31 ist auf dem Rohr 18 eine erste Hülse 32 mit einer ersten Verjüngung 33 am unteren Ende in Form einer umlaufenden Fase geführt. Die erste Hülse 32 ist mit der ersten Verjüngung 33 tiefer in den ersten O-Ring 31 einschiebbar. Die erste Hülse 32 hat am oberen ersten Ende 34 einen umlaufenden Bund 35, der wiederum eine ebene erste Stirnfläche 36 an der Oberseite aufweist. An der Oberseite der ersten Hülse liegt ein auf dem Rohr 18 geführter zweiter O-Ring 37 aus elastomerem Material an.

Darüber ist eine zweite Hülse 38 auf dem Rohr 18 geführt. Die zweite Hülse 38 hat unten eine zweite Verjüngung 39 in Form einer Fase. Die zweite Hülse 38 ist mit der zweiten Verjüngung 39 tiefer in den zweiten O-Ring 37 einschiebbar.

Die zweite Hülse 38 hat oben eine ebene zweite Stirnfläche 40. An der zweiten Stirnfläche 40 liegt ein auf dem Rohr 18 geführter Ausgleichsring 41 an.

Die erste und die zweite Hülse 32, 38 bestehen aus einem starren Material, z.B. aus einem Metall oder aus einem Kunststoff. Die ersten und zweiten O-Ringe 31, 37 bestehen aus einem elastomeren Material, z.B. Gummi, Silikon oder thermoplastisches Elastomer. Der Ausgleichsring 41 besteht aus einem elastomeren oder im Wesentlichen starren Material.

Die Rohre 18 bilden gemeinsam mit dem Stützvorsprung 30, den ersten und zweiten O-Ringen 31, 37 sowie den ersten und zweiten Hülsen 32,38 einen Ansatz 42 zum Festklemmen von Pipettenspitzen 43.

Unterhalb der Bodenwand 5 und oberhalb der zweiten Hülse 38 ist eine Druckplatte 44 angeordnet. Diese hat zweite Löcher 45, durch die die Rohre 18 der Ansätze 42 hindurchgeführt sind. Die zweiten Löcher 45 sind so bemessen, dass die Druckplatte 44 mit dem Rand der zweiten Löcher 45 an der Oberseite der Ausgleichsringe 41 anliegt.

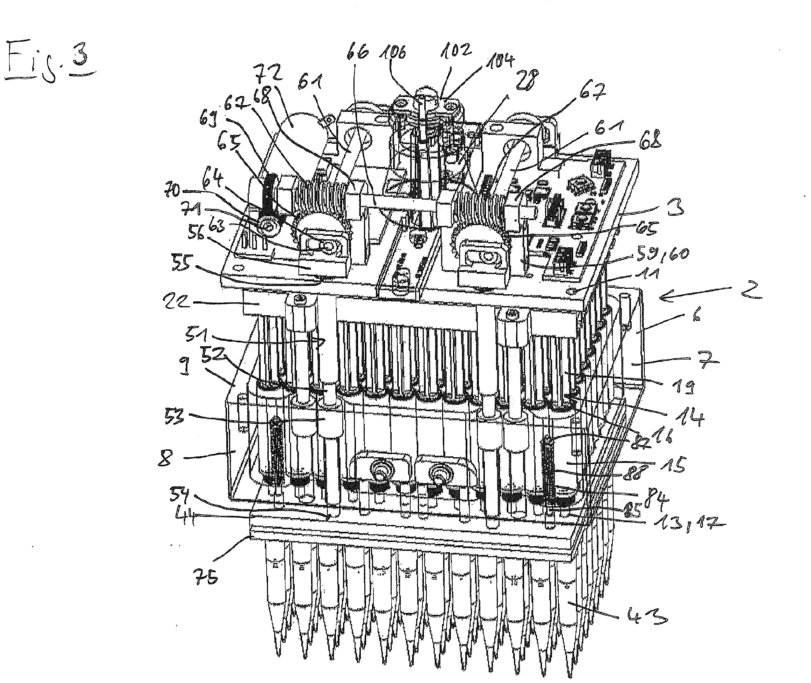

Gemäß Fig. 3 und 4 ist eine Pipettenspitze 43 ein Röhrchen 46 mit einer Spitzenöffnung 47 am unteren Ende und einer Aufstecköffnung 48 am oberen Ende. Angrenzend an die Aufstecköffnung 48 hat die Pipettenspitze 43 im Inneren einen Dichtsitz 49. Der Innendurchmesser und der Außendurchmesser einer Pipettenspitze 43 vergrößern sich im Allgemeinen von der Spitzenöffnung 47 zur Aufstecköffnung 48 hin. Im Beispiel hat die Pipettenspitze 43 mehrere konische und zylindrische Bereiche sowie eine zylindrische Erweiterung 50 in der Nähe des oberen Endes.

Gemäß Fig. 4 ist ein Ansatz 42 des Dosierkopfes 1 durch die Aufstecköffnung 48 in die Pipettenspitze 43 eingeführt. Die O-Ringe 31, 37 sind auf Höhe des Dichtsitzes 49 angeordnet. Gemäß Fig. 5 sind durch Verlagern der Druckplatte 44 nach unten die ersten und zweiten Hülsen 32, 38 nach unten verschoben, sodass die ersten und zweiten O-Ringe 31, 37 axial zusammengepresst und in Umfangsrichtung aufgeweitet sind. Hierdurch ist die aufgesteckte Pipettenspitze 43 abdichtend am Ansatz festgeklemmt. Durch Anheben der Druckplatte 44 ist die Verspannung der Pipettenspitze 43 auf dem Ansatz 42 lösbar.

Gemäß Figur 1 bis 3 ist zum Verlagern der Druckplatte 44 in vertikaler Richtung eine dritte Verlagerungseinrichtung 51 vorhanden. Diese weist vier Führungsachsen 52 auf, die fest mit der Druckplatte 44 verbunden sind. Jede Führungsachse 52 ist unten in der Druckplatte 44 verschraubt. Jede Führungsachse 52 ist in einem Kugelumlaufgetriebe 53 reibungsarm geführt, das in dem Trägergehäuse 4 gehalten ist.

Die vier Führungsachsen 52 sind durch erste Durchgangslöcher 54 der Bodenwand 5 und zweite Durchgangslöcher 55 der Trägerplatte 3 hindurchgeführt und stehen oben über die Trägerplatte 3 hinaus. Dort ist jede Führungsachse 52 mit einem Kulissenelement 56 verbunden, das unten eine Kulissenbasis 57 hat, in die die Führungsachse 52 eingeschraubt ist. Auf der Oberseite der Kulissenbasis 57 hat jedes Kulissenelement 56 eine Kulisse 58 in Form eines Langloches.

Vier Kulissen 58 sind symmetrisch bezüglich des Befestigungszapfens 28 an den längsseitigen Rändern der Trägerplatte 3 angeordnet.

Auf der Oberseite der Trägerplatte 3 sind jeweils in zwei ersten Lagerböcken 59 mit darin gehaltenen ersten Kugellagern 60 erste Wellen 61 gelagert. Die ersten Wellen 61 tragen an ihren Enden jeweils eine Exzenterscheibe 62 mit einem darauf angeordneten Exzenter 63. Auf jedem Exzenter 63 ist ein zweites Kugellager 64 gelagert, das in eine Kulisse 58 eingreift.

Jede Exzenterscheibe 62 hat auf dem Umfang ein erstes Schneckenrad 65. Die beiden ersten Schneckenräder 65 sind in einer Ebene angeordnet.

In derselben Ebene befindet sich oberhalb der beiden Schneckenräder 65 eine zweite Welle 66, auf der zwei erste Schnecken 67 ausgebildet sind, die mit den Schneckenrädern 65 kämmen. Die zweite Welle 66 ist in zweiten Lagerböcken 68 gelagert, die am oberen Rand der ersten Lagerböcke 59 fixiert sind, die neben den Schneckenrädern 65 die ersten Wellen 61 lagern.

Am Ende der zweiten Welle 66 sitzt ein zweites Schneckenrad 69. Das zweite Schneckenrad 69 kämmt mit einer zweiten Schnecke 70, die auf der Motorwelle 71 eines Elektromotors 72 fixiert ist, die parallel zu den ersten Wellen 61 ausgerichtet ist.

Die Drehbewegung der Motorwelle 71 des Elektromotors 72 wird über die zweite Welle 66 auf die ersten Wellen 61 übertragen. Diese verlagern über das Exzentergetriebe 73 mit Exzentern 63 und Kulissen 58 und die Führungsachsen 52 die Druckplatte 44. Durch Antreiben des Elektromotors 72 in verschiedenen Richtungen kann somit die Druckplatte 44 angehoben oder abgesenkt werden. Hierdurch können die Pipettenspitzen 43 auf den Ansätzen 42 fixiert oder freigegeben werden.

Die dritte Verlagerungseinrichtung 51 umfasst somit sämtliche Bauteile von den Führungsachsen 52 bis zum Elektromotor 72, welche die Verlagerung der Druckplatte 44 bewirken. Die dritte Verlagerungseinrichtung 51 und die Druckplatte 44 bilden gemeinsam eine erste Verlagerungseinrichtung 74 zum Verlagern der Hülsen 32, 38.

Unterhalb der Druckplatte 44 ist eine rechteckige Anschlagplatte 75 angeordnet. Die Anschlagplatte 75 hat erste Löcher 76, in die die Ansätze 42 eingreifen. Die ersten Löcher 76 sind so bemessen, dass die Ansätze 42 einschließlich der Stützvorsprünge 30, der ersten und zweiten O-Ringe 31, 37 und der ersten und zweiten Hülsen 32, 38 durch die ersten Löcher 76 hindurchgesteckt werden können.

Die Anschlagplatte 75 ist in vertikaler Richtung verlagerbar. In einer Anschlagstellung, die sich weiter oben befindet, dient die Anschlagplatte 75 als Anschlag für das Aufstecken von Pipettenspitzen 43. In einer Abwurfstellung, die sich weiter unten befindet, drückt die Anschlagplatte 75 sämtliche Pipettenspitzen 43 von den Ansätzen 42 ab.

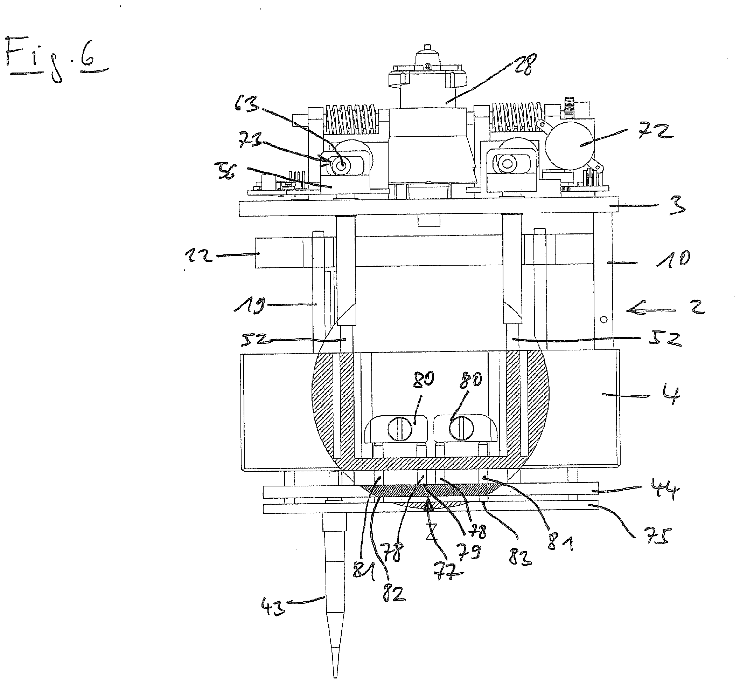

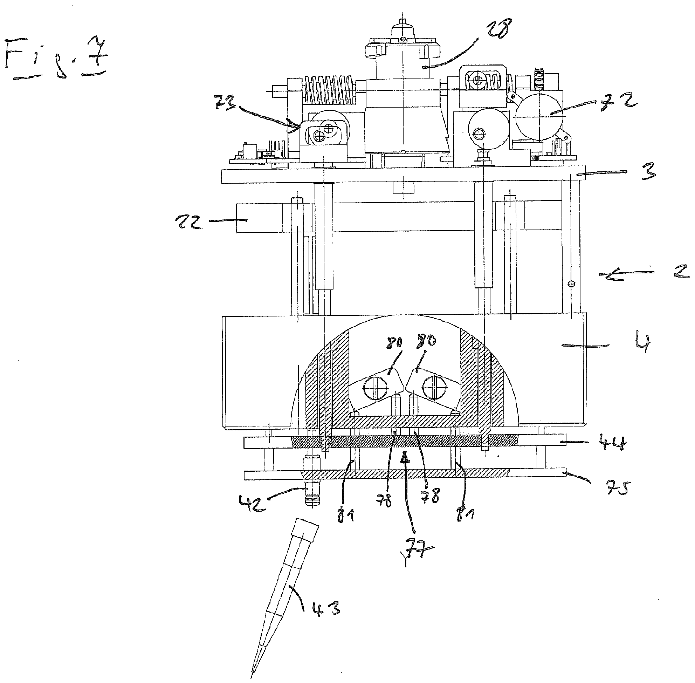

Gemäß Figur 6 und 7 ist zum Verlagern der Anschlagplatte 75 in vertikaler Richtung eine zweite Verlagerungseinrichtung 77 vorhanden. Diese umfasst Übertragungsachsen 78, wobei von jeder Längsseite der Druckplatte 44 zwei Übertragungsachsen 78 hochstehen. Die Übertragungsachsen 78 sind mit ihren unteren Enden in Gewindelöcher 79 der Druckplatte 44 eingeschraubt.

Die oberen Enden der Übertragungsachsen 78 liegen lose an den Enden von Kipphebeln 80 an, die an den Innenseiten des Trägergehäuses 4 schwenkbar gelagert sind. Die anderen Enden der Kipphebel 80 liegen lose an den oberen Enden von Abwurfachsen 81 an, die durch dritte Durchgangslöcher 82 der Druckplatte 44 hindurchgeführt sind und deren unteren Enden in vierten Gewindebohrungen 83 der Anschlagplatte 75 verschraubt sind.

Gemäß Fig. 3 ist die Anschlagplatte 75 über vier Federelemente 84 an der Bodenwand 5 des Trägergehäuses 4 abgestützt. Die Federelemente 84 weisen jeweils eine Führungsstange 85 auf, die an ihrem unteren Ende in eine fünfte Gewindebohrung 86 der Anschlagplatte 75 eingeschraubt ist. Am oberen Ende der Führungsstange 85 ist ein Teller 87 fixiert. Zwischen dem Teller 87 und der Oberseite der Bodenwand 5 ist auf der Führungsstange 85 eine vorgespannte Schraubenfeder 88 geführt, welche die Anschlagplatte 75 nach oben drückt. Die Verlagerung der Anschlagplatte 75 nach oben ist durch Abstützung der Anschlagplatte 75 an der Druckplatte 44 über die durch die Durchgangslöcher 82 der Druckplatte 44 hindurchgeführten Abwurfachsen 81, die Kipphebel 80 und die von der Druckplatte 44 hochstehenden Übertragungsachsen 78 begrenzt.

Beim Aufstecken von Pipettenspitzen 43 befindet sich die Druckplatte 44 in der Freigabestellung und die Anschlagplatte 75 in der Anschlagstellung gemäß Fig. 4 und 6. Die Pipettenspitzen 43 sind bis zum Anliegen an der Anschlagplatte 75 auf die Ansätze 42 aufschiebbar.

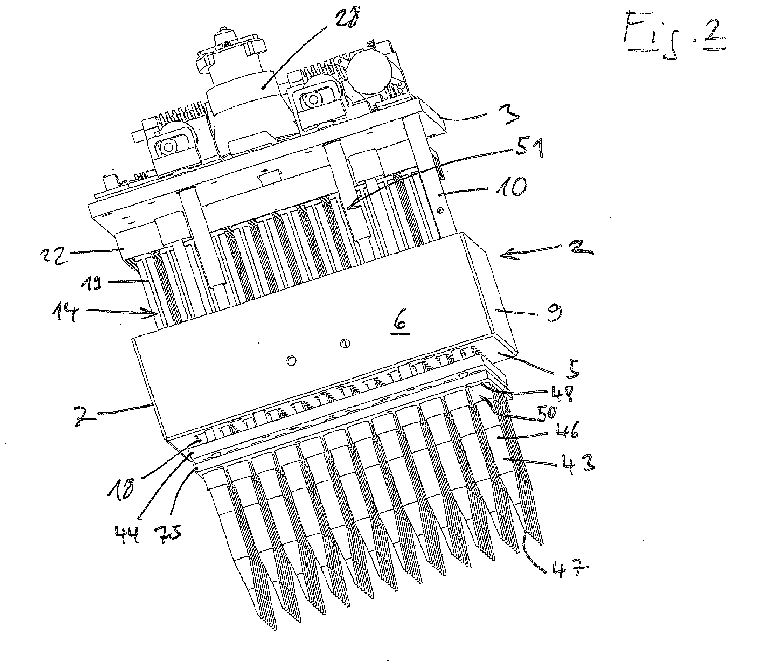

Über das Exzentergetriebe 73 und die Führungsachsen 52 wird die Druckplatte 44 nach unten bis in die Klemmstellung verlagert und hierdurch die Pipettenspitzen 43 auf den Ansätzen 42 festgeklemmt. Hierbei wird vorzugsweise die Anschlagplatte 75 durch eine Anschlageinrichtung mit von der Bodenwand 5 nach unten vorstehenden Anschlagelementen daran gehindert, aus der Anschlagstellung nach oben auszuweichen. Diese Situation ist in Fig. 2, 3, 5 und 6 gezeigt.

Zum Abwerfen von Pipettenspitzen wird die Druckplatte 44 nach oben bis in die Freigabestellung verlagert. Hierbei wird die Verspannung der Pipettenspitzen 43 auf den Ansätzen 42 gelöst. Zugleich kippen die Übertragungsachsen 78 die Kipphebel 80 und letztere verlagern die Abwurfachsen 81 und damit die Anschlagplatte 75 nach unten bis in die Abwurfstellung. Hierdurch werden die Pipettenspitzen 43 von den Ansätzen 42 abgestreift. Diese Situation ist in Fig. 7 gezeigt.

Für die erneute Aufnahme von Pipettenspitzen 43 werden die Führungsachsen 52 angehoben, bis die Druckplatte 44 die Freigabestellung und die Anschlagplatte 75 die Anschlagstellung von Fig. 1 erreichen.

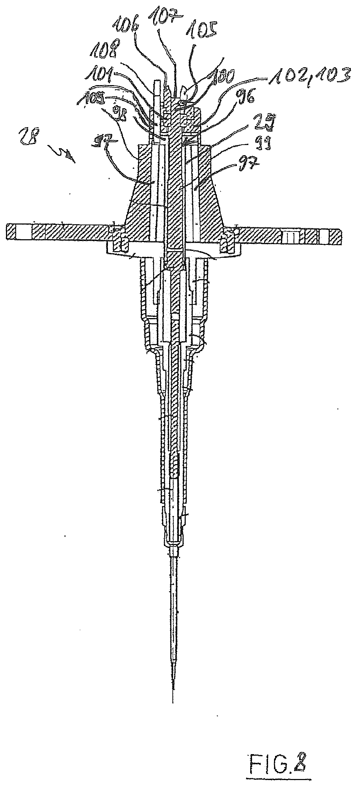

Gemäß Fig. 1 bis 3 und 8 hat der Befestigungszapfen 28 oben einen zylindrischen oberen Zapfenabschnitt 91. Der obere Zapfenabschnitt 91 trägt am Außenumfang zwei um 180° zueinander versetzte, radial nach außen vorspringende, jeweils teilweise umlaufende Verbindungselemente 92, um eine Bajonett-Verbindung 93 zu bilden. Die Verbindungselemente 92 haben an der Unterseite eine leichte Gewindesteigung zum Verspannen mit einem dazu passenden Verbindungselement in einer Zapfenaufnahme einer Bajonett-Verbindung.

Angrenzend an den oberen Zapfenabschnitt 91 hat der Befestigungszapfen 28 einen zylindrischen mittleren Zapfenabschnitt 94 mit einem größeren Außendurchmesser als der obere Zapfenabschnitt 91.

Darunter hat der Befestigungszapfen 28 einen konisch sich nach unten erweiternden, unteren Zapfenabschnitt 95. Der untere Zapfenabschnitt 95 ist an seiner Basis auf der Oberseite der Trägerplatte 3 fixiert.

In Längsrichtung des Befestigungszapfens 28 erstreckt sich eine zentrale Bohrung 96. Diese hat zwei diametral einander gegenüberliegende Längsnuten 97.

In die zentrale Bohrung 96 ist die hülsenförmige Gewindemutter 29 eingesetzt, die mit zwei radial vorspringenden Flügeln 98 an ihrem oberen Ende in den Längsnuten 97 geführt ist.

Ferner ist in die Gewindemutter 29 eine Spindel 99 eingeschraubt. Diese hat oberhalb ihres Gewindes einen vorstehenden Lagerzapfen 100, an dem sie in einem dritten Kugellager 101 gelagert ist. Das dritte Kugellager 101 ist in einer Lagerbuchse 102 eines Lagerträgers 103 gehalten, der zwei diametral von den Seiten vorstehende Laschen 104 hat, die auf dem oberen Rand des oberen Zapfenabschnittes 91 aufliegen und daran mittels Schrauben fixiert sind.

An einem über das dritte Kugellager 101 hinausstehenden Teil des Lagerzapfens 100 ist mittels eines radialen Gewindestiftes 105 ein Mitnehmer 106 drehfest fixiert, der an seiner oberen Stirnseite einen radial und axial erstrecken Schlitz 107 zum Einführen eines klinkenförmigen Antriebsorganes aufweist.

Die Spindel 99 stützt sich an der Stirnseite des dritten Kugellagers 101 ab. Der Mitnehmer 106 stützt sich an der Oberseite des Lagerträgers 103 ab. Die Spindel 99 ist hierdurch axial nicht verlagerbar im Befestigungszapfen 28 gehalten.

In einem Flügel der Gewindemutter 29 ist ein Zylinderstift 108 fixiert, der parallel zur Mittelachse der Gewindemutter 29 ausgerichtet durch eine Nut 109 des Lagerträgers 103 hindurchgeführt ist und oben aus dem Befestigungszapfen 28 heraussteht.

Durch Drehen des Mitnehmers 106 verschiebt die axial im Befestigungszapfen 28 festgehaltene Spindel 99 die unverdrehbar in dem Befestigungszapfen 28 geführte Gewindemutter 29 in axialer Richtung. Hierdurch wird die Kolbenplatte 22 verlagert und die Kolben 16 in den Zylindern 15 verschoben. Durch Drehen des Mitnehmers 106 in unterschiedlichen Richtungen sind die Kolben 16 in verschiedenen Richtungen in den Zylindern 15 verschiebbar. Durch Abtasten der Lage des Zylinderstiftes 108 ist es möglich, die jeweilige Stellung der Kolben 16 in den Zylindern 15 zu ermitteln.

Der Befestigungszapfen 28 und der darin integrierte Antrieb mit Gewindemutter 29 und Spindel 99 entsprechen den Ausführungsbeispielen von Fig. 1 bis 4 sowie 6 gemäß EP 1 407 861 B1.

Ein Dosierautomat oder Laborautomat ist mit einer komplementären Zapfenaufnahme einer Bajonett-Verbindung versehen, die mit dem Befestigungszapfen verbindbar ist. Vorzugsweise entspricht das komplementäre Verbindungsteil dem Werkzeughalter gemäß Fig. 7 bis 10 der vorgenannten Patentschrift. Die diesbezügliche Beschreibung wird durch Bezugnahme in die vorliegende Anmeldung einbezogen.

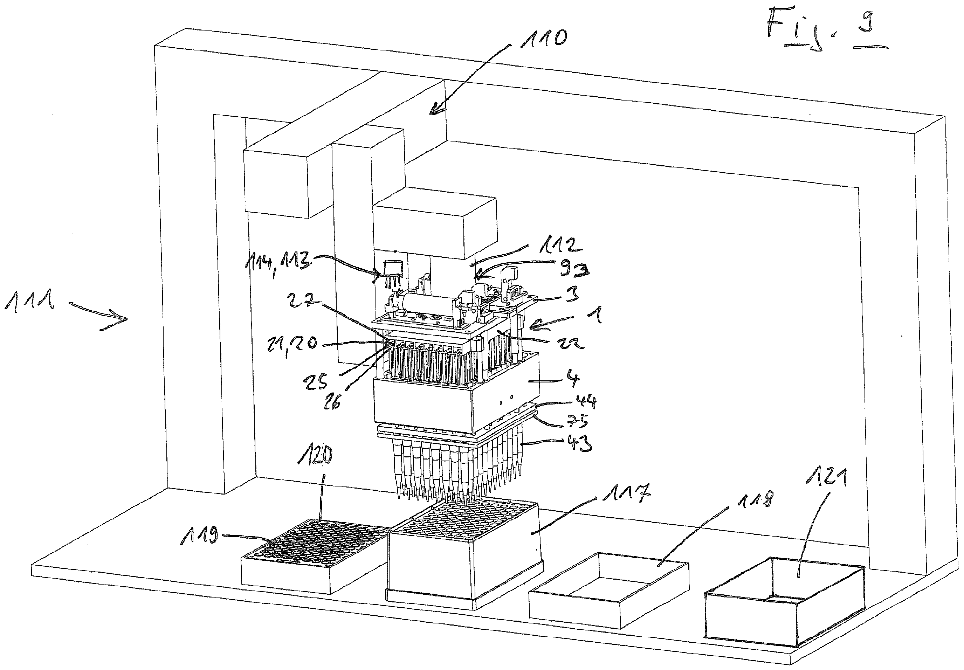

Gemäß Fig. 9 ist der Dosierkopf 1 mit einem Dreiachsübertrager 110 eines Dosierautomaten 111 gekoppelt. Hierfür ist der Befestigungszapfen 28 in einer entsprechenden Zapfenaufnahme 112 am Dreiachsübertrager 110 gehalten. Zusätzliche Einrichtungen zum Koppeln erster Steckverbindungen 113 und zweiter Steckverbindungen 114 einer elektrischen Spannungsversorgung des Dosierautomaten für den Elektromotor 72 und einer elektrischen Steuerungseinrichtung des Dosierautomaten 111 mit dem Dosierkopf 1 sind ebenfalls am Dreiachsübertrager 110 vorhanden. Über die zweiten Steckverbindungen 114 werden beispielsweise Signale eines die Drehstellung der Motorwelle 71 erfassenden Drehwinkelgebers an die Steuerungseinrichtung 110 und Motorsteuerungssignale von der Steuerungseinrichtung an eine Motorsteuerung auf den Dosierkopf 1 übertragen.

Mit Hilfe des Dosierautomaten 111 können automatisch Pipettenspitzen 43 aufgenommen und abgeworfen werden, sowie Flüssigkeiten dosiert werden. In Fig. 9 ist der Dosierkopf 1 nach der Aufnahme von Pipettenspitzen 43 aus einem Halter 117 mit den aufgeklemmten Pipettenspitzen 43 angehoben. Der Dosierkopf 1 kann für die Aufnahme von Flüssigkeiten aus einem Vorlagenbehälter 118 so verfahren werden, dass die Spitzenöffnungen in den Vorlagenbehälter 118 eintauchen. Nach der Aufnahme von Flüssigkeit kann der Dosierkopf 1 mit den Pipettenspitzen 43 in die Aufnahmen ("*wells*") 119 einer Mikrotiterplatte 120 hineingefahren werden, um Flüssigkeit in die Aufnahmen abzugeben. In der Mikrotiterplatte 120 kann die Flüssigkeit weiterbehandelt werden, z.B. mit weiteren Flüssigkeiten gemischt, physikalisch, chemisch oder biochemisch behandelt oder analysiert werden. Schließlich kann der Dosierkopf 1 über eine Abfallbehälter 121 verfahren und die Pipettenspitzen 43 in den Abfallbehälter 121 abgeworfen werden.

### Bezugszeichenliste:

- 1: Dosierkopf
- 2: Träger
- 3: Trägerplatte
- 4: Trägergehäuse
- 5: Bodenwand
- 6: Seitenwand
- 7: Seitenwand
- 8: Seitenwand
- 9: Seitenwand
- 10: Stehbolzen
- 11: (erste) Gewindebohrung
- 12: (zweite) Gewindebohrung
- 13: (dritte) Gewindebohrung
- 14: Kolben-Zylinder-Einheit
- 15: Zylinder
- 16: Kolben
- 17: Außengewinde
- 18: Rohr
- 19: Kolbenstange
- 20: Kolbenkopf
- 21: Ringnut
- 22: Kolbenplatte
- 23: Kanal
- 24: Kanalwand
- 25: Kanalschulter
- 26: Schlitzöffnung
- 27: Stirnöffnung
- 28: Befestigungszapfen
- 29: Gewindemutter
- 30: Stützvorsprung
- 31: (erster) O-Ring
- 32: (erste) Hülse
- 33: (erste) Verjüngung
- 34: (erstes) Ende
- 35: Bund
- 36: (erste) Stirnfläche
- 37: (zweiter) O-Ring
- 38: (zweite) Hülse
- 39: (zweite) Verjüngung
- 40: (zweite) Stirnfläche
- 41: Ausgleichsring
- 42: Ansatz
- 43: Pipettenspitze
- 44: Druckplatte
- 45: (zweite) Löcher
- 46: Röhrchen
- 47: Spritzenöffnung
- 48: Aufstecköffnung
- 49: Dichtsitz
- 50: Erweiterung
- 51: (dritte) Verlagerungseinrichtung
- 52: Führungsachse
- 53: Kugelumlaufgetriebe
- 54: (erste) Durchgangslöcher
- 55: (zweite) Durchgangslöcher
- 56: Kulissenelement
- 57: Kulissenbasis
- 58: Kulisse
- 59: (erster) Lagerbock
- 60: (erstes) Kugellager
- 61: (erste) Welle
- 62: Exzenterscheibe
- 63: Exzenter
- 64: (zweites Kugellager)
- 65: (erstes) Schneckenrad
- 66: (zweite) Welle
- 67: (erste) Schnecke
- 68: (zweiter) Lagerbock
- 69: (zweites) Schneckenrad
- 70: (zweite) Schnecke
- 71: Motorwelle
- 72: Elektromotor
- 73: Exzentergetriebe
- 74: (erste) Verlagerungseinrichtung
- 75: Anschlagplatte
- 76: (erste) Löcher
- 77: (zweite) Verlagerungseinrichtung
- 78: Übertragungsachse
- 79: Gewindeloch
- 80: Kipphebel
- 81: Abwurfachse
- 82: (drittes) Durchgangsloch
- 83: (vierte) Gewindebohrung
- 84: Federelement
- 85: Führungsstange
- 86: (fünfte) Gewindebohrung
- 87: Teller
- 88: Schraubenfeder
- 91: (oberer) Zapfenabschnitt
- 92: Verbindungselement
- 93: Bajonett-Verbindung
- 94: (mittlerer) Zapfenabschnitt
- 95: (unterer) Zapfenabschnitt
- 96: (zentrale) Bohrung
- 97: Längsnut
- 98: Flügel
- 99: Spindel
- 100: Lagerzapfen
- 101: (drittes) Kugellager
- 102: Lagerbuchse
- 103: Lagerträger
- 104: Lasche
- 105: Gewindestift
- 106: Mitnehmer
- 107: Schlitz
- 108: Zylinderstift
- 109: Nut
- 110: Dreiachsübertrager
- 111: Dosierautomat
- 112: Zapfenaufnahme
- 113: (erste) Steckverbindung
- 114: (zweite) Steckverbindung
- 115: Spannungsversorgung
- 116: Steuerungseinrichtung
- 117: Halter
- 118: Vorlagenbehälter
- 119: Aufnahme
- 120: Mikrotiterplatte
- 121: Abfallbehälter

## Patentansprüche

1. Dosierkopf für einen Dosierautomaten oder eine andere Dosiervorrichtung umfassend:
• mindestens einen Ansatz (42), der folgende Merkmale aufweist:
• ein Rohr (18) mit einem nach außen vorstehenden zumindest teilweise umlaufenden Stützvorsprung (30) am unteren Ende,
• mindestens eine Hülse (32, 38) mit einer umlaufenden Verjüngung (33, 39) am unteren Ende, die das Rohr (18) umschließt und auf dem Rohr (18) axial verlagerbar ist,
• mindestens einen elastomeren O-Ring (31, 37), der das Rohr (18) umschließt und neben der Verjüngung (33, 39) angeordnet ist, und
• die Hülse (32, 38) ist zwischen einer Freigabestellung in einem ersten Abstand von den Stützvorsprüngen (30) und einer Klemmstellung in einem den ersten Abstand unterschreitenden, zweiten Abstand von den Stützvorsprüngen (30) verlagerbar, in der Klemmstellung ist die Hülse (32, 38) mit der Verjüngung (39) in den benachbarten elastomeren O-Ring (37) hineingepresst und ist der elastomere O-Ring (31, 37) aufgeweitet, um eine auf den Ansatz (42) aufgeschobene Pipettenspitze (43) festzuklemmen,
• **gekennzeichnet durch**
• einen Träger (2), an dem nebeneinander eine Vielzahl paralleler Ansätze (42) zum Aufnehmen von Pipettenspitzen (43) angeordnet ist,
• eine Anschlagplatte (75), die eine Vielzahl erster Löcher (76) aufweist, durch die sich die Ansätze (42) hindurch erstrecken,
• eine erste Verlagerungseinrichtung (74), die mit den Hülsen (32, 38) sämtlicher Ansätze (42) gekoppelt und ausgebildet ist, die Hülsen (32, 38) zwischen der Freigabestellung und der Klemmstellung zu verlagern,
• eine zweite Verlagerungseinrichtung (77), die mit der Anschlagplatte (75) verbunden und ausgebildet ist, die Anschlagplatte (75) zwischen einer Anschlagstellung in einem ersten Abstand von den Stützvorsprüngen (30) und einer Abwurfstellung in einem zweiten Abstand von den Stützvorsprüngen (30), der den ersten Abstand unterschreitet, zu verlagern, um in der Anschlagstellung Pipettenspitzen (43) bis zur Anlage an der Anschlagplatte (75) auf die Ansätze (42) aufzuschieben und durch Verlagern der Anschlagplatte (75) aus der Anschlagstellung in die Abwurfstellung von den Ansätzen (42) abzuwerfen,
• wobei die zweite Verlagerungseinrichtung (77) schwenkbar auf dem Träger (2) gelagerte Kipphebel (80), mit den Hülsen (32, 38) gekoppelte Übertragungsachsen (78), die jeweils an einem Ende eines Kipphebels (80) angreifen, und fest mit der Anschlagplatte (75) verbundene, jeweils an einem anderen Ende eines Kipphebels (80) anliegende Abwurfachsen (81) aufweist, sodass beim Verlagern der Hülsen (32, 38) in die Freigabestellung die Übertragungsachsen (78) die Kipphebel (80) schwenken und diese über die Abwurfachsen (81) die Anschlagplatte (75) aus der Anschlagstellung in die Abwurfstellung drücken.

2. Dosierkopf nach Anspruch 1,
• bei dem jeder Ansatz (42) folgende Merkmale aufweist:
• eine erste Hülse (32) mit einer umlaufenden ersten Verjüngung (33) am unteren Ende, die das Rohr (18) umschließt und auf dem Rohr (18) axial verlagerbar ist,
• einen elastomeren ersten O-Ring (31), der das Rohr (18) umschließt und neben der ersten Verjüngung (33) angeordnet ist,
• eine zweite Hülse (38) mit einer umlaufenden zweiten Verjüngung (39) am unteren Ende, die oberhalb der ersten Hülse (32) das Rohr (18) umschließt und auf dem Rohr (18) axial verlagerbar ist,
• einen elastomeren zweiten O-Ring (37), der das Rohr (18) umschließt, neben der zweiten Verjüngung (39) angeordnet ist und unten an der ersten Hülse (32) abgestützt ist,
• wobei in der Klemmstellung die zweiten Hülsen (38) mit den zweiten Verjüngungen (39) in die benachbarten elastomeren zweiten O-Ringe (37) hineingepresst und die ersten Hülsen (32) mit den ersten Verjüngungen (33) in die benachbarten elastomeren ersten O-Ringe (31) hineingepresst sind und die elastomeren ersten und zweiten O-Ringe (31, 37) aufgeweitet sind, um auf die Ansätze (42) aufgeschobene Pipettenspitzen (43) festzuklemmen, und
• bei dem die erste Verlagerungseinrichtung (74) mit den ersten und zweiten Hülsen (32, 38) sämtlicher Ansätze (42) gekoppelt und ausgebildet ist, die ersten und zweiten Hülsen (32, 38) zwischen der Freigabestellung und der Klemmstellung zu verlagern.

3. Dosierkopf nach Anspruch 1 oder 2, umfassend:
• eine oberhalb der Hülsen (32, 38) angeordnete Druckplatte (44) mit einer Vielzahl zweiter Löcher (45), durch die sich die Rohre (18) hindurch erstrecken, wobei die Druckplatte (44) entlang der Rohre (18) zwischen einer Freigabestellung in einem ersten Abstand von den Stützvorsprüngen (30) in eine Klemmstellung in einem den ersten Abstand unterschreitenden, zweiten Abstand von den Stützvorsprüngen (30) verlagerbar ist, die Druckplatte (44) in der Klemmstellung so gegen den oberen Rand der benachbarten Hülsen (38) sämtlicher Ansätze (42) drückt, dass die Hülsen (32, 38) in die benachbarten elastomeren O-Ringe (31,37) hineingepresst und die elastomeren O-Ringe (31, 37) aufgeweitet sind, um auf die Ansätze (42) aufgeschobene Pipettenspitzen (43) festzuklemmen,
• eine dritte Verlagerungseinrichtung (51), die mit der Druckplatte (44) verbunden ist und ausgebildet ist, um die Druckplatte (44) zwischen der Freigabestellung und der Klemmstellung zu verlagern.

4. Dosierkopf nach Anspruch 3, bei dem die Übertragungsachsen (78) fest mit der Druckplatte (44) verbunden sind und von dieser hochstehen.

5. Dosierkopf nach einem der Ansprüche 1 bis 4, bei dem die erste Verlagerungseinrichtung (74) und/oder die zweite Verlagerungseinrichtung (77) an dem Träger (2) abgestützt ist.

6. Dosierkopf nach einem der Ansprüche 3 bis 5, bei dem die dritte Verlagerungseinrichtung (51) mindestens eine Führungsachse (52) aufweist, die unten mit der Druckplatte (44) verbunden ist und oben über ein Exzentergetriebe (73) mit einem Elektromotor (72) gekoppelt ist, wobei vorzugsweise jede Führungsachse (52) in einem Kugelumlauflager (53) gelagert ist, das im Träger (2) gehalten ist.

7. Dosierkopf nach Anspruch 5 oder 6, bei dem jede Führungsachse (52) am oberen Ende eine senkrecht zur Führungsachse erstreckte Kulisse (58) aufweist, ein Exzenter (63) an einer senkrecht zur Führungsachse (52) und zur Kulisse (58) gerichteten ersten Welle (61) in die Kulisse (58) eingreift und die erste Welle (61) mit einem Elektromotor (72) gekoppelt ist, wobei vorzugsweise jeder Exzenter (63) ein Kugellager (64) trägt, das in einer Kulisse (58) geführt ist.

8. Dosierkopf nach einem der Ansprüche 5 bis 7, bei dem ein einziger Elektromotor (72) über ein Getriebe mit sämtlichen ersten Wellen (61) gekoppelt ist.

9. Dosierkopf nach einem der Ansprüche 3 bis 8, bei dem die Anschlagplatte (75) unterhalb der Druckplatte (44) angeordnet ist.

10. Dosiervorrichtung umfassend einen Dosierkopf (1) gemäß einem der Ansprüche 1 bis 9.

11. Dosiervorrichtung nach Anspruch 10, die eine Dosierstation oder ein Dosierautomat (111) oder ein Laborautomat oder eine Mehrkanalpipette ist.

12. Dosiervorrichtung nach Anspruch 11, umfassend mindestens eine der nachstehenden Einrichtungen:
• mindestens einen Halter (117) mit einer Vielzahl darin gehaltener Pipettenspitzen (43),
• mindestens ein Probengefäß (120) zum Bereitstellen von flüssigen Proben,
• mindestens ein Reagenzgefäß (118) zum Bereitstellen von Reagenzien,
• mindestens einen Abfallbehälter (121) zum Aufnehmen gebrauchter Pipettenspitzen (43).

13. Dosiervorrichtung nach Anspruch 11 oder 12, bei dem der Dosierkopf (1) an einen Dreiachsübertrager (110) gehalten ist, der ausgebildet ist, den Dosierkopf (1) entlang von drei Achsen zu verlagern.

14. Verfahren zum Dosieren von Flüssigkeiten, bei dem die Flüssigkeiten mittels eines Dosierkopfes gemäß einem der Ansprüche 1 bis 9 dosiert werden.

15. Verfahren gemäß Anspruch 14, bei dem
• eine Gruppe Pipettenspitzen in einem Halter für Pipettenspitzen bereitgestellt wird,
• die Hülsen des Dosierkopfes in die Freigabestellung verlagert wird,
• der Dosierkopf mit den Ansätzen in die oberen Enden der bereitgestellten Pipettenspitzen eingeführt wird, bis die elastomeren O-Ringe in die bereitgestellten Pipettenspitzen eintauchen,
• die Hülsen in die Klemmstellung gebracht und hierdurch die Pipettenspitzen auf den Ansätzen festgeklemmt werden,
• der Dosierkopf angehoben und die darauf festgeklemmten Pipettenspitzen aus dem Halter entnommen werden,
• mit den auf den Ansätzen des Dosierkopfes festgeklemmten Pipettenspitzen Dosierungen durchgeführt werden,
• die Pipettenspitzen durch Verlagern der Hülsen aus der Klemmstellung in die Freigabestellung von den Ansätzen freigegeben werden.

16. Verfahren nach Anspruch 14 oder 15, bei dem vor dem Eintauchen der Ansätze in die Pipettenspitzen die Anschlagplatte in die Anschlagstellung gebracht wird und die Ansätze in die Pipettenspitzen abgesenkt werden, bis die oberen Enden der Pipettenspitzen an der Anschlagplatte anliegen, danach die Pipettenspitzen durch Verlagern der Hülsen aus der Freigabestellung in die Klemmstellung an den Ansätzen festgeklemmt werden und nach Durchführen der Dosierungen die Pipettenspitzen durch Verlagern der Hülsen aus der Klemmstellung in die Freigabestellung und durch Verlagern der Anschlagplatte aus der Anschlagstellung in die Abwurfstellung von den Ansätzen gelöst werden.

## Claims

1. A metering head for a metering machine or another metering device comprising:
• at least one attachment (42) having the following features:
• a tube (18) which has a supporting protrusion (30) at the bottom end that protrudes outward and extends peripherally at least partially,
• at least one sleeve (32, 38) with a peripheral tapering (33, 39) at the bottom end which surrounds the tube (18) and can be axially shifted on the tube (18),
• at least one elastomer O-ring (31, 37) which surrounds the tube (18) and is arranged adjacent to the tapering (33, 39), and
• the sleeve (32, 38) can be shifted between a release position at a first distance from the supporting projections (30) and a clamping position at a second distance from the supporting projections (30) that is smaller than the first distance; in the clamping position, the sleeve (32, 38) with the tapering (39) is pressed into the adjacent elastomer O-ring (37), and the elastomer O-ring (31, 37) is expanded in order to securely clamp the pipette tip (43) shoved onto the attachment (42),
**characterized by**
• a carrier (2) on which a plurality of parallel attachments (42) for picking up pipette tips (43) are arranged adjacent to each other,
• a stop plate (75) that has a plurality of first holes (76) through which the attachments (42) extend,
• a first shifting apparatus (74) that is coupled to the sleeves (32, 38) of all the attachments (42), and is designed to shift the sleeves (32, 38) between the release position and clamping position,
• a second shifting apparatus (77) that is connected to the stop plate (75) and is designed to shift the stop plate (75) between a stop position at a first distance from the supporting projections (30) and an ejection position at a second distance from the supporting projections (30) that is smaller than the first distance in order to shove pipette tips (43) on the attachments (42) in the stop position until contacting the stop plate (75), and to eject them from the attachments (42) by shifting the stop plate (75) from the stop position to the ejection position,
• wherein the second shifting apparatus (77) comprises rocker arms (80) that are pivotably mounted on the carrier (2), transmission shafts (78) that are coupled to the sleeves (32, 38) and each contact one end of a rocker arm (80), and ejection shafts (81) which are securely connected to the stop plate (75) and each lie against another end of a rocker arm (80) so that when the sleeves (32, 38) are shifted into the release position, the transmission shafts (78) pivot the rocker arms (80), and they press the stop plate (75) via the ejection shafts (81) out of the stop position into the ejection position.

2. The metering head according to claim 1,
• wherein each attachment (42) has the following features:
• a first sleeve (32) with a peripheral first tapering (33) at the bottom end which surrounds the tube (18) and can be axially shifted on the tube (18),
• an elastomer first O-ring (31) which surrounds the tube (18) and is arranged adjacent to the first tapering (33),
• a second sleeve (38) with a peripheral second tapering (39) at the bottom end which surrounds the tube (18) above the first sleeve (32) and can be axially shifted on the tube (18),
• an elastomer second O-ring (37) which surrounds the tube (18), is arranged adjacent to the second tapering (39), and is supported at the bottom by the first sleeve (32),
• wherein in the clamping position, the second sleeves (38) with the second taperings (39) are pressed into the adjacent elastomer second O-rings (37), and the first sleeves (32) with the first taperings (33) are pressed into the adjacent elastomer first O-rings (31), and the elastomer first and second O-rings (31, 37) are expanded in order to securely clamp the pipette tips (43) shoved onto the attachments (42), and
• wherein the first shifting apparatus (74) is coupled to the first and second sleeves (32, 38) of all the attachments (42), and is designed to shift the first and second sleeves (32, 38) between the release position and clamping position.

3. The metering head according to claim 1 or 2, comprising:
• a pressure plate (44) which is arranged above the sleeves (32, 38) and which has a plurality of second holes (45) through which the tubes (18) extend, wherein the pressure plate (44) can be shifted along the tubes (18) between a release position at a first distance from the supporting protrusions (30) in a clamping position into a second distance from the supporting protrusions (30) that is smaller than the first distance, the pressure plate (44) presses against the upper edge of the adjacent sleeves (38) of all attachments (42) in the clamping position in such a way that the sleeves (32, 38) are pressed into the adjacent elastomer O-rings (31, 37), and the elastomer O-rings (31, 37) are expanded in order to securely clamp pipette tips (43) shoved onto the attachments (42),
• a third shifting apparatus (51) which is connected to the pressure plate (44) and is designed to shift the pressure plate (44) between the release position and the clamping position.

4. The metering head according to claim 3, wherein the transmission axes (78) are securely connected to the pressure plate (44) and project upward therefrom.

5. The metering head according to one of claims 1 to 4, wherein the first shifting apparatus (74) and/or the second shifting apparatus (77) is/are braced against the carrier (2).

6. The metering head according to one of claims 3 to 5, wherein the third shifting apparatus (51) has at least one guide shaft (52) that is connected at the bottom to the pressure plate (44) and is coupled at the top by an eccentric gearing (73) to an electric motor (72), wherein preferably, each guide shaft (52) is mounted in a radial ball bearing (53) which is held in the carrier (2).

7. The metering head according to claim 5 to 6, wherein each guide shaft (52) has a gate (58) that extends at the top end perpendicular to the guide shaft, an eccentric (63) that is on a first shaft (61) oriented perpendicular to the guide shaft (52) and the gate (58) and engages in the gate (58), and the first shaft (61) is coupled to an electric motor (72), wherein preferably, each eccentric (63) bears a ball bearing (64) which is guided in a gate (58).

8. The metering head according to one of claims 5 to 7, wherein a single electric motor (72) is coupled by a gearing to all the first shafts (61).

9. The metering head according to one of claims 3 to 8, wherein the stop plate (75) is arranged below the pressure plate (44).

10. A metering device comprising a metering head (1) according to one of claims 1 to 9.

11. The metering device according to claim 10 that is a metering station, or a metering machine (111), or a laboratory machine, or a multichannel pipette.

12. The metering device according to claim 11, comprising at least one of the following apparatuses:
• at least one holder (117) with a plurality of pipette tips (43) held therein,
• at least one specimen vessel (120) for providing liquid specimens,
• at least one reagent vessel (118) for providing reagents,
• at least one waste container (121) for picking up used pipette tips (43).

13. The metering device according to claim 11 or 12, wherein the metering head (1) is held on a three-axis transfer unit (110) that is designed to shift the metering head (1) along three axes in space.

14. A method for metering liquids, wherein the liquids are metered by means of a metering head according to one of claims 1 to 9.

15. The method according to claim 14, wherein:
• a group of pipette tips are provided in a holder for pipette tips,
• the sleeves of the metering head are shifted into the release position,
• the metering head with the attachments is introduced into top ends of the provided pipette tips until the elastomer O-rings dip into the provided pipette tips,
• the sleeves are brought into the clamping position, and the pipette tips are thereby clamped securely to the attachments,
• the metering head is lifted, and the pipette tips securely clamped thereto are removed from the holder,
• meterings are carried out with the pipette tips clamped securely to the attachments of the metering head,
• the pipette tips are released from the attachments by shifting the sleeves from the clamping position into the release position.

16. The method according to claim 14 or 15, wherein the stop plate is brought into the stop position before dipping the attachments into the pipette tips, and the attachments are lowered into the pipette tips until the top ends of the pipette tips lie against the stop plate, then the pipette tips are securely clamped to the attachments by shifting the sleeves from the release position into the clamping position, and after the meterings are carried out, the pipette tips are detached from the attachments by shifting the sleeves from the clamping position into the release position, and by shifting the stop plate from the stop position into the ejection position.

## Revendications

1. Tête de dosage pour un automate de dosage ou un autre dispositif de dosage, comportant :
• au moins un embout (42) présentant les caractéristiques suivantes :
• un tuyau (18) avec une saillie d'appui (30) au moins partiellement périphérique faisant saillie vers l'extérieur à l'extrémité inférieure,
• au moins un manchon (32, 38) avec un amincissement périphérique (33, 39) à l'extrémité inférieure, lequel entoure le tuyau (18) et peut être déplacé axialement sur le tuyau (18),
• au moins un joint torique élastomère (31, 37) entourant le tuyau (18) et disposé à côté de l'amincissement (33, 39), et
• le manchon (32, 38) peut être déplacé entre une position de libération à une première distance des saillies d'appui (30) et une position de serrage à une deuxième distance des saillies d'appui (30) inférieure à la première distance, où, dans la position de serrage, le manchon (32, 38) est pressé avec l'amincissement (39) dans le joint torique élastomère (37) voisin et le joint torique élastomère (31, 37) est élargi, pour serrer une pointe de pipette (43) montée sur l'embout (42),
• **caractérisée en ce que**
• un support (2) sur lequel est disposée une pluralité d'embouts parallèles l'un à côté de l'autre(42) destinés à recevoir des pointes de pipette (43),
• une plaque de butée (75) présentant une pluralité de premiers trous (76) à travers lesquels s'étendent les embouts (42),
• un premier système de déplacement (74) accouplé aux manchons (32, 38) de l'ensemble des embouts (42) et conçu pour déplacer les manchons (32, 38) entre la position de libération et la position de serrage,
• un deuxième système de déplacement (77) relié à la plaque de butée (75) et conçu pour déplacer la plaque de butée (75) entre une position de butée à une première distance des saillies d'appui (30) et une position d'éjection à une deuxième distance des saillies d'appui (30), laquelle est inférieure à la première distance, afin de pousser des pointes de pipette (43) sur les embouts (42) dans la position de butée jusqu'à ce que celles-ci s'appliquent contre la plaque de butée (75) et pour éjecter celles-ci des embouts (42) dans la position d'éjection par déplacement de la plaque de butée (75),
• dans laquelle le deuxième système de déplacement (77) présente des leviers basculants (80) montés de façon pivotante sur le support (2), des axes de transmission (78) accouplés aux manchons (32, 38), lesquels agissent respectivement sur une extrémité d'un levier basculant (80), et des axes d'éjection (81) reliés fixement à la plaque de butée (75) et s'appliquant respectivement sur une autre extrémité d'un levier basculant (80), de sorte que lors du déplacement des manchons (32, 38) vers la position de libération, les axes de transmission (78) font pivoter les leviers basculants (80) et ceux-ci pressent la plaque de butée (75) hors de la position de butée vers la position d'éjection par le biais des axes d'éjection (81).

2. Tête de dosage selon la revendication 1,
• dans laquelle chaque embout (42) présente les caractéristiques suivantes :
• un premier manchon (32) avec un premier amincissement périphérique (33) à l'extrémité inférieure, lequel entoure le tuyau (18) et peut être déplacé axialement sur le tuyau (18),
• un premier joint torique élastomère (31) entourant le tuyau (18) et disposé à côté du premier amincissement (33),
• un deuxième manchon (38) avec un deuxième amincissement périphérique (39) à l'extrémité inférieure, lequel entoure le tuyau (18) au-dessus du premier manchon (32) et peut être déplacé axialement sur le tuyau (18),
• un deuxième joint torique élastomère (37) entourant le tuyau (18), disposé à côté du deuxième amincissement (39) et s'appuyant sur le premier manchon (32) sur le bas,
• dans laquelle, dans la position de serrage, les deuxièmes manchons (38) sont pressés avec les deuxièmes amincissements (39) dans les joints toriques élastomères (37) voisins et les premiers manchons (32) sont pressés avec les premiers amincissements (33) dans les joints toriques élastomères (31) voisins et les premiers et deuxièmes joints toriques élastomères (31, 37) sont élargis, pour serrer les pointes de pipette (43) montées sur les embouts (42), et
• dans laquelle le premier système de déplacement (74) est accouplé aux premiers et deuxièmes manchons (32, 38) de l'ensemble des embouts (42) et conçu pour déplacer les premiers et deuxièmes manchons (32, 38) entre la position de libération et la position de serrage.

3. Tête de dosage selon la revendication 1 ou 2, comportant :
• une plaque de pression (44) avec une pluralité de deuxièmes trous (45), disposée au-dessus des manchons (32, 38), à travers laquelle s'étendent les tuyaux (18), la plaque de pression (44) étant déplaçable le long des tuyaux (18), entre une position de libération à une première distance des saillies d'appui (30) et une position de serrage à une deuxième distance des saillies d'appui (30) inférieure à la première distance, la plaque de pression (44) étant pressée de telle façon dans la position de serrage contre le bord supérieur des manchons (38) voisins de l'ensemble des embouts (42), que les manchons (32, 38) sont pressés dans les joints toriques élastomères (31, 37) voisins et les joints toriques élastomères (31, 37) sont élargis, pour serrer des pointes de pipette (43) montées sur les embouts (42),
• un troisième système de déplacement (51) relié à la plaque de pression (44) et conçu pour déplacer la plaque de pression (44) entre la position de libération et la position de serrage.

4. Tête de dosage selon la revendication 3, dans lequel les axes de transmission (78) sont reliés fixement à la plaque de pression (44) et font saillie vers le haut à partir de celle-ci.

5. Tête de dosage selon l'une des revendications 1 à 4, dans laquelle le premier système de déplacement (74) et/ou le deuxième système de déplacement (77) s'appuie(nt) sur le support (2).

6. Tête de dosage selon l'une des revendications 3 à 5, dans laquelle le troisième système de déplacement (51) présente au moins un axe de guidage (52), lequel est relié sur le bas à la plaque de pression (44) et accouplé sur le haut à un moteur électrique (72) par le biais d'un engrenage excentrique (73), chaque axe de guidage (52) étant de préférence monté dans un palier à recirculation de billes (53), lequel est maintenu dans le support (2).

7. Tête de dosage selon l'une des revendications 5 ou 6, dans laquelle chaque axe de guidage (52) présente une coulisse (58) s'étendant perpendiculairement à l'axe de guidage à l'extrémité supérieure, un excentrique (63) s'engage dans la coulisse (58) sur un premier arbre (61) orienté perpendiculairement à l'axe de guidage (52) et à la coulisse (58), et le premier arbre (61) est accouplé au moteur électrique (72), chaque excentrique (63) portant de préférence un palier à billes (64) guidé dans une coulisse (58).

8. Tête de dosage selon l'une des revendications 5 à 7, dans laquelle un seul moteur électrique (72) est accouplé à l'ensemble des premiers arbres (61) par le biais d'un engrenage.

9. Tête de dosage selon l'une des revendications 3 à 8, dans laquelle la plaque de butée (75) est disposée sous la plaque de pression (44).

10. Dispositif de dosage comportant une tête de dosage (1) selon l'une des revendications 1 à 9.

11. Dispositif de dosage selon la revendication 10, laquelle consiste en une station de dosage ou en un automate de dosage (111) ou en un automate de laboratoire ou en une pipette à plusieurs canaux.

12. Dispositif de dosage selon la revendication 11, comportant au moins l'un des systèmes suivants :
• au moins un élément de maintien (117) avec une pluralité de pointes de pipette (43) maintenues dans celui-ci,
• au moins un récipient à échantillons (120) pour la mise à disposition d'échantillons liquides,
• au moins un récipient à réactifs (118) pour la mise à disposition de réactifs,
• au moins un récipient à déchets (121) pour la réception de pointes de pipette (43) usagées.

13. Dispositif de dosage selon la revendication 11 ou 12, dans lequel la tête de dosage (1) est maintenue sur un transmetteur à trois axes (110), lequel est conçu pour déplacer la tête de dosage (1) le long de trois axes.

14. Procédé de dosage de liquides, dans lequel les liquides sont dosés à l'aide d'une tête de dosage selon l'une des revendications 1 à 9.

15. Procédé selon la revendication 14, dans lequel
• un groupe de pointes de pipette est mis à disposition dans un élément de maintien pour pointes de pipette,
• les manchons de la tête de dosage sont déplacés vers la position de libération,
• la tête de dosage est introduite avec les embouts dans les extrémités supérieures des pointes de pipette mises à disposition, jusqu'à ce que les joints toriques élastomères s'insèrent dans les pointes de pipette mises à disposition,
• les manchons sont mis dans la position de serrage et les pointes de pipette sont ainsi serrées sur les embouts,
• la tête de dosage est relevée et les pointes de pipette serrées sur celle-ci sont retirées de l'élément de maintien,
• des dosages sont effectués avec les pointes de pipette serrées sur les embouts de la tête de dosage,
• les pointes de pipette sont libérées des embouts par déplacement des manchons de la position de serrage vers la position de libération.

16. Procédé selon la revendication 14 ou 15, dans lequel, avant l'insertion des embouts dans les pointes de pipette, la plaque de butée est mise dans la position de butée et les embouts sont abaissés dans les pointes de pipette, jusqu'à ce les extrémités supérieures des pointes de pipette s'appliquent sur la plaque de butée, les pointes de pipette sont ensuite serrées sur les embouts par déplacement des manchons de la position de libération vers la position de serrage, et après avoir effectué les dosages les pointes de pipette sont détachées des embouts par déplacement des manchons de la position de serrage vers la position de libération et par déplacement de la plaque de butée de la position de butée vers la position d'éjection.
